# EUROPEAN PATENT SPECIFICATION

(11) **EP 2 088 597 B1**
(45) Date of publication and mention of the grant of the patent: **19.08.2015**
(21) Application number: 07831313.7
(22) Date of filing: 06.11.2007
(51) Int. Cl.: G11B 20/18, G11B 7/0037

(54) **OPTICAL DISC DEVICE**
OPTISCHE DATENTRÄGEREINRICHTUNG
DISPOSITIF DE DISQUE OPTIQUE

(30) Priority: 07.11.2006 JP 2006302054
(43) Date of publication of application: 12.08.2009
(73) Proprietor: Panasonic Corporation, Kadoma-shi Osaka 571-8501 (JP)
(72) Inventor: KAIDA, Masaru, Osaka-shi, Osaka 540-6207 (JP); UEDA, Hiroshi, Osaka-shi, Osaka 540-6207 (JP); TAKAUCHI, Kenji, Osaka-shi, Osaka 540-6207 (JP)
(74) Representative: Grünecker Patent- und Rechtsanwälte PartG mbB
(86) International application number: PCT/JP2007/071581
(87) International publication number: WO 2008/056681

(56) References cited:
- EP-A1- 2 073 208
- EP-A2- 0 397 126
- JP-A- 03 260 955
- JP-A- 11 167 751
- JP-A- 2001 176 204
- US-A1- 2005 207 305
- US-A1- 2006 007 801

## Description

### TECHNICAL FIELD

The present invention relates to an optical disc apparatus and a method for making a defect management on an optical disc. More particularly, the present invention relates to a technique for managing storage areas so that no data is written on a defective area that has been produced, as a result of a write error, as a bubble that covers a broad storage area.

### BACKGROUND ART

A known optical disc is an information storage medium with a sector structure. Optical discs are roughly classifiable into three types according to their property. A first type is a read-only disc on which data is stored as unevenness on the surface and to which the user is never allowed to add any data newly. A second type is a write-once disc, which includes an organic dye or any other appropriate material as a recording film and on which data can be written only once. And a third type is a rewritable disc, which includes a phase change material or other suitable material as a recording film and on which data can be written and rewritten a number of times.

Recently, as audiovisual data including audio data and video data (which will be referred to herein as "AV data") has been broadcast or distributed in the digital form more and more often, there is an increasing demand for optical discs with higher storage densities and bigger storage capacities. To increase the storage capacity, it is an effective measure to take to provide multiple storage layers for a single disc. For example, as for a read-only DVD, the single optical disc has two storage layers, thereby achieving twice as big a capacity as a normal single-layer disc's. Meanwhile, a Blu-ray Disc (BD), which has been developed just recently, has approximately five times as high a storage density per storage layer as a DVD.

As the storage capacities go on increasing, new methods for managing disc areas have been proposed one after another. For example, Patent Document No. 1 discloses a disc area management method for writing data on a BD-R, which is a write-once medium (i.e., a storage medium on which data can be written only once), in real time and reading the stored data with high accuracy.

Patent Document No. 1: Japanese Patent Application Laid-Open Publication No. 2006-24287

US 2006/007801 A1 relates to an information-recording system comprising a recording means for recording data on a recording medium, a record-position-information generation means, an error-detection means and an operation-control means. US 2005/207305 A1 relates to a method and an apparatus for recording data on a write-once recording medium. EP 0 397 126 A2 relates to a defect inspecting apparatus for a disc-shaped information recording medium.

### DISCLOSURE OF INVENTION

### PROBLEMS TO BE SOLVED BY THE INVENTION

In a BD, the protective coating on the laser beam incoming side (i.e., a light transmitting layer arranged between the disc surface on which the laser beam is incident and the storage layer) has as small a thickness as 0.1 mm. A spin coating process is known as a technique for forming such a protective coating.

However, if the spin-coating process is adopted, then the air could be trapped in the gap between the light transmitting layer and the substrate itself to produce bubbles there. In an optical disc with a thinner light transmitting layer and a narrower track pitch such as a BD, the light transmitting layer could warp and lose planarity locally due to the presence of those bubbles and the area with such a bubble would be a large-scale defective area that covers several tens to several hundreds of clusters or even multiple tracks. On BDs, among other things, such large-scale defective areas are produced more and more often. It should be noted that conventional optical discs have been hardly affected by such bubbles because their light transmitting layer is sufficiently thick.

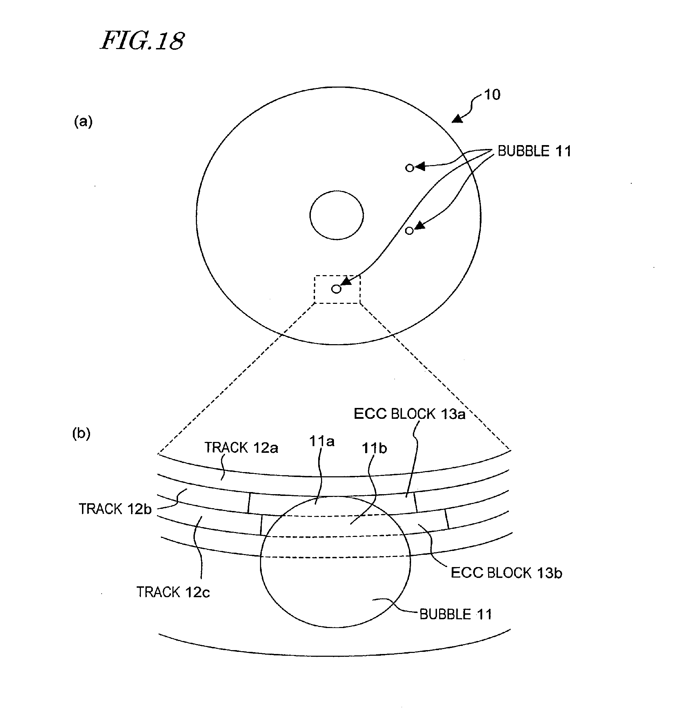

Hereinafter, bubbles and large-scale defective areas produced by the bubbles will be described in further detail. Portion **(a)** of FIG. **18** schematically illustrates the surface of a BD **10** with bubbles **11**. In portion **(a)** of FIG. **18****,** the bubbles **11** are illustrated as visible ones to let the reader understand more easily how they affect the operation. Actually, however, there are some invisible bubbles, too.

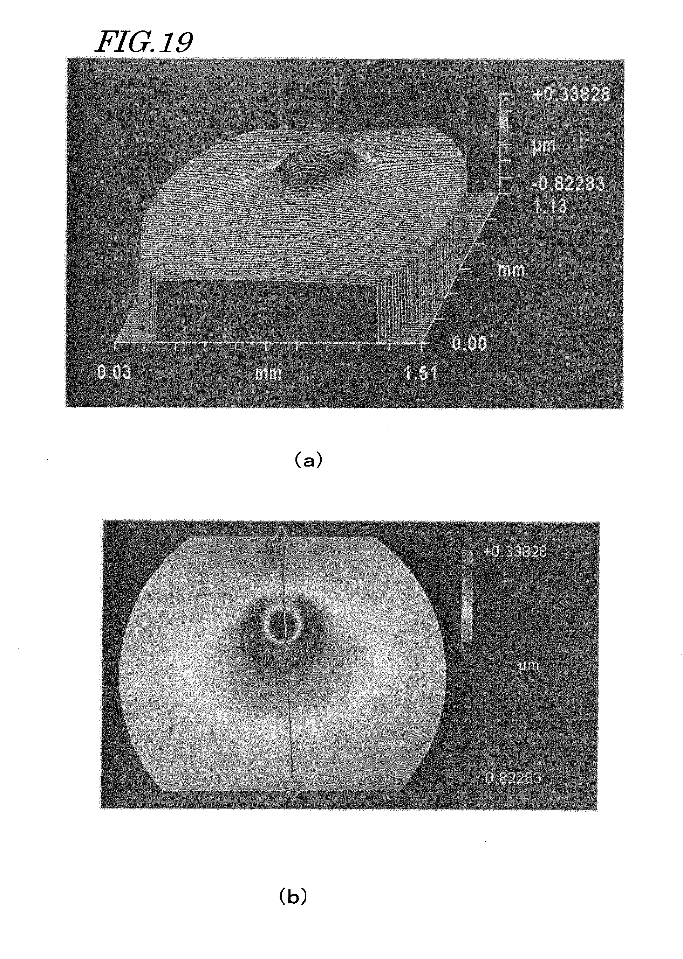

FIGS. **19(a)** and **19(b)** illustrate the shape of a raised portion that was actually formed on the surface of a BD (i.e., on the surface of its light transmitting layer) due to the production of a bubble. A bubble typically has a size (or diameter) of approximately 500 µm to approximately 1,000 µm. If a bubble were produced between the information layer of a BD and the light-transmitting layer thereof, the surface of the light-transmitting layer would be raised locally as shown in FIG. **19** because the light-transmitting layer has as small a thickness as approximately 100 µm. Almost no reflected light returns from the center (or the core) of the bubble but the light beam is not transmitted normally through the raised portion surrounding the bubble, either. The objective lens for use to perform a read/write operation on a BD has a high numerical aperture NA and forms a focal point on a shallow information layer under the surface of the disc. That is why even if the light-transmitting layer were warped only slightly, the spherical aberration would change significantly and the intensity of the reflected light would vary easily.

A bubble may or may not be produced easily according to the type of the manufacturing process of BDs. Specifically, a BD, of which the light-transmitting layer has been formed by a spin-coating process as described above, tends to have a lot of bubbles. On the other hand, a BD, of which the light-transmitting layer has been formed (as a protective sheet) by a bonding process, tends to have a small number of bubbles. It should be noted that bubbles could still be produced by the latter process, too.

Now take a look at FIG. **18** again. Portion **(b)** of FIG. **18** shows a relation between a bubble **11** on the BD **10** and tracks. In the example illustrated in portion **(b)** of FIG. **18****,** the bubble **11** is present over the track **12b** and other tracks (including the track **12c**) that are located closer to the outer edge than the track **12b** is, among the tracks **12a** through **12c.** On each of these tracks, data is stored on the basis of a data unit called "ECC block" (or "cluster"). When converted into sectors (each having a size of 2 kilobytes), which are the smallest data unit on an optical disc, one cluster is equal to 32 sectors on a BD. Portions **11a** and **11b** of the bubble **11** are present at the storage locations of clusters **13a** and **13b,** respectively.

A BD has a track pitch of 0.32 µm. Thus, supposing a single bubble (core) has a size of approximately 100 µm, at most about 300 ( = 100/0.32) tracks would be affected by a single bubble. On top of that, as an area surrounding the bubble is usually affected, the influence of a bubble could reach a range that typically has a size of about 200 µm (corresponding to approximately 600 tracks).

Data is supposed to be read or written using clusters as minimal units (i.e., on a cluster-by-cluster basis). If there is a bubble on a boundary between clusters, then data cannot be read or written from/on multiple clusters. In addition, due to the influence of the bubble, it is often impossible to read or write data from/on clusters surrounding the bubble, either.

Furthermore, even if there is only one bubble on a single track of a BD, some clusters could be accessed but others could not. For example, there are just two clusters on the innermost track. That is why if access to one of the two clusters failed, then that track could become entirely inaccessible. As described above, the number of clusters included in several hundreds of tracks could reach several thousands. As a result, that area with the core of the bubble and its surrounding area become a large-scale defective area.

Also, due to the influence of bubbles, the servo control could lose its stability over a length of approximately 1 mm at most in the tracking direction.

In such a range where the servo control loses its stability, the write operation would be retried (i.e., recovery processing should be performed) frequently due to the occurrence of tracking errors or track jumps, thus causing a significantly longer delay than usual just by attempting to get to the target location. And if such a situation persisted over a range of approximately 200 µm (corresponding to about 600 tracks) or more, some of the data that should have been written could be missing or it might take an even longer amount of time to get dubbing done. That is why considering that a recorder is required to get recording done in real time without missing any part, data should be read or written from a non-bubble area.

Patent Document No. 1 cited above proposes that if a write error has occurred, an area that has a fixed size as measured from the location where the write error has occurred is regarded as a non-recordable area and writing should be presumed at a predetermined distance from the current location.

Such a writing method, however, cannot cope effectively with a large-scale defective area produced by a bubble. For example, if the bubble area is relatively small, the recordable area actually begins far ahead of the location that is the predetermined distance away from the current location and therefore will be wasted in vain even though it is available for recording.

Furthermore, if such a large-scale defective area produced by a bubble is accessed, then the light beam spot may jump from the target track, on which data should be written, to reach the adjacent track and possibly destroy the data stored there.

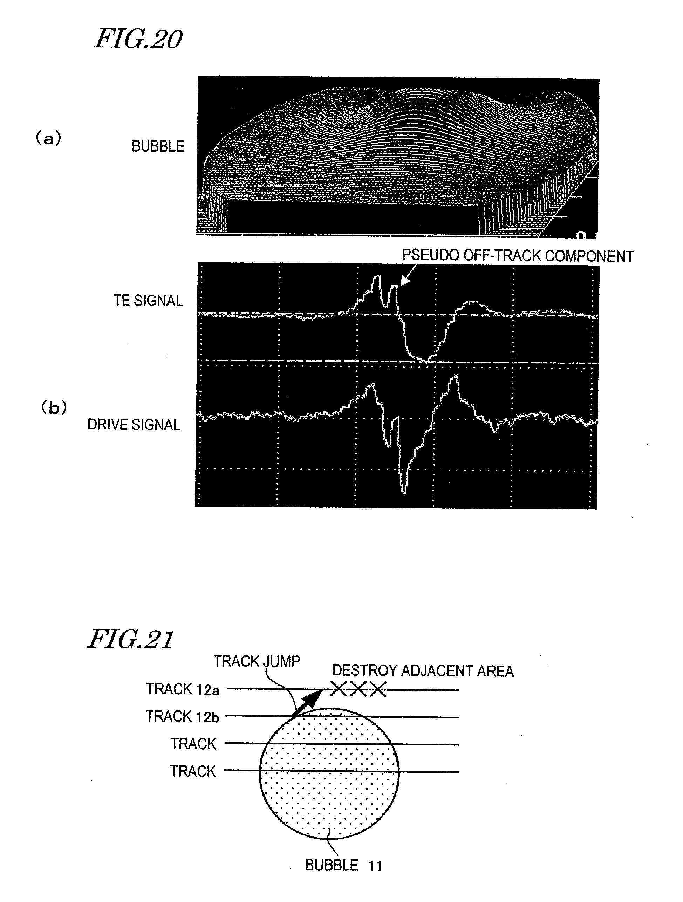

FIG. **20(a)** illustrates the unevenness formed on the surface of an optical disc due to the presence of a bubble, while FIG. **20(b)** shows the respective waveforms of a TE signal and a drive signal to be monitored when a light beam passes the bubble. While the light beam is following the centerline of the tracks, the amplitude of the TE signal is at zero level. However, as the light beam shifts from the centerline of the tracks in the disc radial direction, the TE signal comes to have non-zero amplitude components. In that case, to cancel the shift (which is so-called "off-track") of the light beam from the centerline of the tracks, the position of the objective lens in the optical pickup is adjusted in the disc radial direction. The position of the objective lens in the disc radial direction is adjusted by a lens actuator in the optical pickup. The drive signal shown in FIG. **20(b)** shows the waveform of drive current supplied to the lens actuator.

As shown in FIG. **20(b)**, when the light beam crosses the bubble on the BD, the waveform of the TE signal comes to have a component representing a pseudo off-track phenomenon. Such a waveform component is produced due to the presence of a bubble even if the light beam does follow the centerline of the tracks. That is why such a component will be referred to herein as a "pseudo off-track component" of a TE signal. If such a pseudo off-track component were produced in the TE signal, the tracking control would be carried out in response to the pseudo off-track component and the light beam spot would come off the target track, which is a problem called "abnormal track jump".

FIG. **21** schematically illustrates an abnormal track jump. That is to say, FIG. **21** shows that while data is being written on a track **12b,** the light beam spot happens to jump to an adjacent track **12a** due to the presence of a bubble **11**. In that case, the write processing will be continued on the wrong track **12a**, thus destroying the existent data there by mistake, which is a huge problem. For example, if AV data has been destroyed, the playback will temporarily come to a halt. On the other hand, if management information that is indispensable for playback has been destroyed, then a recorded content could not be played back anymore. Or in a worst-case scenario, no data could be readable at all from that optical disc.

It is therefore an object of the present invention to determine whether or not an error could occur due to presence of a defective area such as a bubble and to manage the storage area according to the size of the defective area such that no data would be written on the defective area if an error occurred.

### MEANS FOR SOLVING THE PROBLEMS

An optical disc apparatus according to the present invention is defined in claim 1.

The storage area may include first, second and third areas that are continuous with each other, where one of the first and third areas may be the defective area, the other area may be either a recorded area where data has been written or another defective area, and the second area may be an unrecorded area where no data has been written yet. If the area size of the unrecorded area is equal to or smaller than a predetermined reference value, the recording range control section may assign not just the defective area but also the unrecorded area as the single sequential recording range. But if the area size of the unrecorded area is greater than the predetermined reference value, the recording range control section may assign only the defective area as the single sequential recording range.

The defect decision section may determine a part of the storage area, where a predicted type of error has occurred due to the presence of the defective area, as the defective area.

The defect decision section may detect a servo error by measuring how long the signal level of a servo signal, which has been generated based on the light detection signal, is greater than a predetermined threshold value and may determine an area where the servo error has occurred to be the defective area.

A number of tracks may be arranged on the optical disc. After the error has been detected, the search section may instruct the optical pickup to access the tracks intermittently, thereby searching for the defective area.

Until the error is detected, the search section may instruct the optical pickup to access the tracks at a first interval. But after the error has been detected, the search section may instruct the optical pickup to access the tracks at a second interval, which is shorter than the first interval, thereby searching for the defective area.

After the error has been detected, the search section may instruct the optical pickup to shift the spot of the irradiating light beam back by at most the first interval, thereby searching for the defective area, while the size measuring section may measure the size of the defective area.

The optical disc apparatus may further include a writing control section for writing management information about the data to be written on the optical disc. The optical disc may have a management information area that stores management information to find a recordable area in which the data can be written. The recording range control section may generate, by reference to the defect information list, management information that does not include a piece of information that designates the defective area as the recordable area and the writing control section may write the management information generated on the management information area of the optical disc.

The storage area may include the defective area and the recordable area. The recording range control section may generate, as the management information, range information indicating the beginning of the recordable area and the end of the data stored and range defining information that defines the range information.

The storage area may include the defective area and the recordable area. The recording range control section may generate range information, indicating the beginning and the end of the defective area, as the management information but does not need to generate any information that defines the range information of the defective area.

The defective area may be an area with a bubble that was produced when the optical disc was made.

The defective area may cover a number of tracks on the optical disc.

The optical disc apparatus of the present invention may include a drive and a high-order controller, which are connected together through an input/output bus. The drive may include the optical pickup, the search section, the defect decision section, and the recording range control section. The high-order controller may include an instruction issuing section for issuing instructions to the drive. The instruction issuing section may output a check command that the defective area be searched for before the data is written on the storage area of the optical disc, a result report command that a result of the search be reported after the defective area has been searched for, and a close command that the defective area be closed such that no data is written on the defective area that has been located by the defect information list.

### EFFECTS OF THE INVENTION

An optical disc apparatus according to the present invention searches for a defective area before data starts to be written on a storage area, measures, if any, the size of the defective area detected, and then manages the storage area so that no data is written on the defective area found. Since the defective area is detected before data starts to be written, the data can be written with the defective area avoided, and therefore, the data writing operation can get done smoothly after that. This would contribute particularly greatly to improving the real-time recording performance of an optical disc apparatus, among other things.

In addition, it is not until the size of the defective area is measured that the storage area is managed so that no data will be written on the defective area. That is why there is no need to waste available areas just to avoid the defective area. As a result, the storage area of the disc can be made full use of.

### BRIEF DESCRIPTION OF DRAWINGS

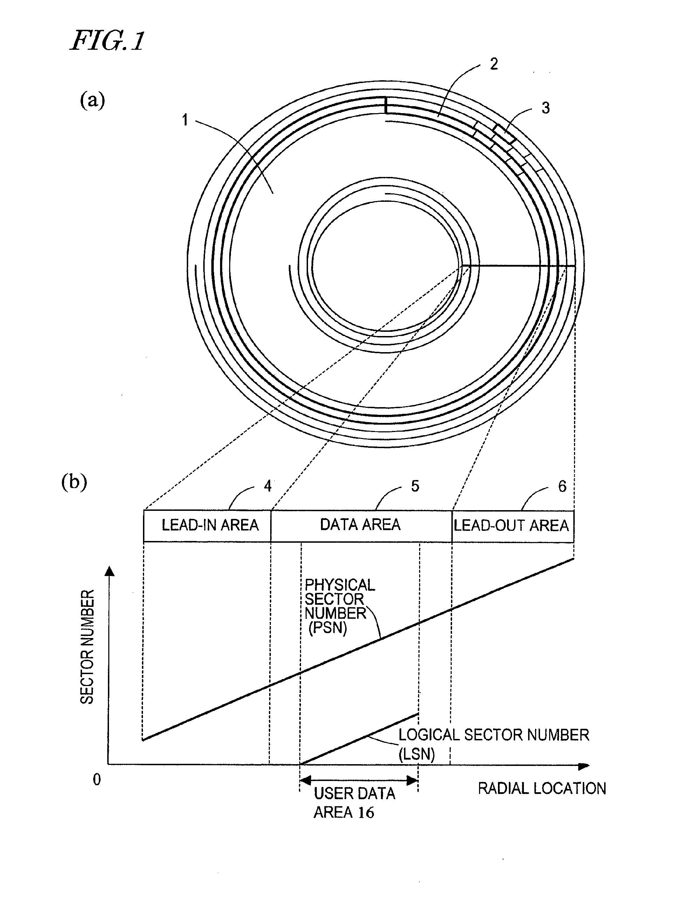

Portions **(a)** and **(b)** of FIG. **1** respectively illustrate the physical and logical structures of an optical disc **1.**
FIG. **2** shows how to assign a user data area **16** in a situation where the optical disc **1** is a BD-R.
FIG. **3** shows a detailed data structure of the optical disc **1** shown in portion **(b)** of FIG. **1****.**
FIG. **4** illustrates the data structure of sequential recording range information **18**.
FIG. **5** shows a detailed data structure of a sequential recording range information header **19.**
FIG. **6** illustrates an arrangement of functional blocks for a BD recorder **100.**
FIG. **7** illustrates an exemplary hardware configuration for an optical disc drive **102** as a preferred embodiment of the present invention.
FIGS. **8(a)** and **8(b)** are schematic representations illustrating the concept of the disc surface check processing of this preferred embodiment.
FIG. **9** shows the waveform of a tracking error signal with a servo error.
FIG. **10** shows the time series of the respective servo error detection processing steps that have been described with reference to FIGS. **8(a)** and **8(b)**, respectively.
FIG. **11** is a flowchart showing the procedure of write processing to get done by the BD recorder **100** with defective areas avoided.
FIG. **12** shows an exemplary format for a disc surface check command.
FIG. **13** shows an exemplary format for a disc surface check result report command.
FIGS. **14(a)** to **14(c)** show an exemplary format for the check result to be reported.
FIG. **15** is a flowchart showing the procedure of disc surface check processing.
FIG. **16** is a flowchart showing the procedure of defective area size measuring processing.
FIGS. **17(a)** and **17(d)** are schematic representations illustrating user data areas with bubble area(s) and FIGS. **17(b)**, **17(c)** and **17(e)** illustrate how to close the sequential recording ranges **SRR.**
Portion **(a)** of FIG. **18** is a schematic representation of a BD **10** with bubbles **11** and portion **(b)** of FIG. **18** is an enlarged view thereof showing a relation between the bubbles **11** and tracks on the BD **10.**
FIGS. **19(a)** and **19(b)** illustrate the shape of a raised portion that was actually formed on the disc surface of a BD (i.e., on the surface of its light transmitting layer) due to the production of a bubble.
FIG. **20(a)** illustrates the unevenness formed on the surface of a disc by a bubble, and FIG. **20(b)** shows the respective waveforms of a TE signal and a drive signal to be monitored when a light beam crosses the bubble.

FIG. **21** schematically illustrates an abnormal track jump.

### DESCRIPTION OF REFERENCE NUMERALS

- **100**: BD recorder
- **102**: optical disc drive
- **104**: high-order controller
- **106**: instruction issuing section
- **108**: buffer
- **110**: instruction processing section
- **120**: writing control section
- **130**: reading control section
- **140**: recording range control section
- **141**: range information processing section
- **142**: control memory
- **150**: surface check section
- **151**: search section
- **152**: defect decision section
- **153**: defect size measuring section
- **154**: defect information buffer
- **160**: data buffer
- **170**: I/O bus

### BEST MODE FOR CARRYING OUT THE INVENTION

Hereinafter, preferred embodiments of an optical disc apparatus according to the present invention will be described with reference to the accompanying drawings.

The physical and logical structures of an optical disc and a method for managing its areas will be described first. After that, the configuration and operation of an optical disc apparatus as a first preferred embodiment of the present invention will be described.

Portion **(a)** of FIG. **1** illustrates the physical structure of an optical disc **1,** which is typically a BD-R that is a write-once medium where data can be written only once.

On the disklike optical disc **1,** arranged spirally are a number of tracks **2,** each of which is further subdivided into a great many sectors **3**.

Portion **(b)** of FIG. **1** illustrates the logical structure of the optical disc **1**. The area on the optical disc **1** is roughly divided into a lead-in area **4**, a data area **5** and a lead-out area **6**. Data is supposed to be read and written from/on the data area **5**.

The data area **5** includes a user data area **16** on which user data is written mostly. The user data area **16** in the data area **5** is preceded and followed by a pair of spare areas to be described later. If there is any defective sector in the user data area **16**, one of the spare areas will be used as a replacement area to store the data that should have been written on that defective sector.

The lead-in area **4** and the lead-out area **6** function as margins that allow the optical head (not shown) to get back on tracks even if the optical head has overrun while accessing an end portion of the data area **5**. That is to say, these areas **4** and **6** function as "rims" so to speak. The lead-in area **4** also includes a disc information area in which various parameters that are needed in accessing the disc are stored. Each sector **3** is given a physical sector number (PSN) to identify that sector **3** from the others. In addition, a sector **3** in the data area **5** is also given a logical sector number (LSN) that is a serial number starting at zero so as to allow a high-order device (not shown) such as a host computer to recognize that sector.

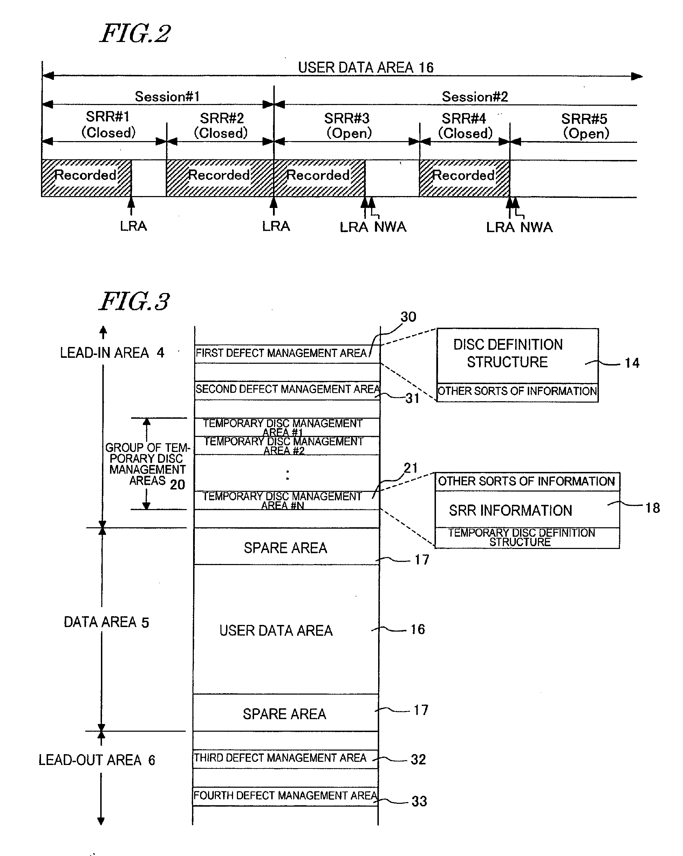

FIG. **2** shows how to assign a user data area **16** in a situation where the optical disc **1** is a BD-R. In the example shown in FIG. **2**, illustrated is an area that has been assigned by a writing method called "sequential recording mode", which is a mode in which data is written sequentially from a writing start point on a BD-R in a predetermined direction (e.g., from an inner area toward the outer edge of the BD-R). According to the sequential writing method, data is written with their time sequence maintained, thus making it possible to increase the read rate significantly.

Data is written on a BD-R on a session-by-session basis. In FIG. **2****,** the user data area **16** is illustrated as including two sessions (i.e., Sessions #1 and #2). However, the user data area **16** may also consist of only one session or three or more sessions.

Each session includes at least one sequential recording range (SRR), which is made up of clusters (each having a size of 64 KB) that are the smallest units of information to be written on a BD-R. And an SRR is a writing unit corresponding to one track on a CD-R (compact disc-recordable). At most 7,600 SRRs may be defined for a single BD-R.

An SRR is either assigned or reserved before data is written, and may be either open or closed. Specifically, in an open SRR, data can be written sequentially. However, once an SRR is closed after data has been written there, the SRR becomes non-recordable. In the example illustrated in FIG. **2****,** SRRs #1 through #5 are defined. Among those ranges, SRRs #3 and #5 are open but the other ranges are closed.

In SRRs #1 through #4 shown in FIG. **2****,** data has already been written in the "recorded" ranges. And at the end of the recorded area within each SRR, described is the last recorded address (LRA), which indicates that this is the end of the recorded area.

In each open SRR, the LRA is followed immediately by a location where data can start to be written. Information about such a location is defined as a next writable address (NWA). Data is added to the open SRR by reference to the next writable address (NWA).

The rest of the user data area **16** that remains even after the SRRs have been reserved will be referred to herein as "invisible SRR". In the example illustrated in FIG. **2****,** SRR #5 is an invisible SRR. If data is written on such an invisible SRR, then the invisible SRR is renamed "incomplete SRR". Every open SRR but the invisible SRR can be closed. And once an open SRR is closed, it becomes a complete SRR. If there is any data on an unrecorded area when an SRR is going to be closed, the unrecorded area may be either padded with null data or left unrecorded as it is.

FIG. **3** shows a detailed data structure for the optical disc **1** shown in portion **(b)** of FIG. **1****.** The lead-in area **4** includes a first defect management area **30,** a second defect management area **31**, and a group of temporary disc management areas **20**. The defect management areas **30** and **31** are areas for managing information about defective blocks in the data area **5** and other pieces of information.

The data area **5** is an area to store data and includes a user data area **16** and spare areas **17.** On the user data area **16,** the user may store any arbitrary type of information including real time data such as music or video and computer data such as sentences or database. The spare areas **17** are replacement areas for the data area **5.** For example, if any defective block has been detected in the user data area **16,** the data that should have been written on the defective block may be written on one of the spare areas **17** instead.

In the data structure for the optical disc **1** shown in FIG. **2**, one spare area **17** is arranged on the innermost portion of the data area **5** (i.e., closest to the lead-in area) and another spare area **17** is arranged on the outermost portion of the data area **5** (i.e., closest to the lead-out area). However, the number and arrangement of the spare areas **17** may be determined arbitrarily and are never limited to the illustrated ones.

The lead-out area **6** includes a third defect management area **32** and a fourth defect management area **33,** which are areas for managing information about defective blocks in the data area **5** and other pieces of information.

Each of the defect management areas **30** to **33** is an area to be arranged at a predetermined location and its size is a fixed length. However, the size of the management information stored in each of the defect management areas **10** through **13** has a length that varies according to the number of defective blocks, for example.

Each of the defect management areas **10** to **13** retains a disc definition structure **14** and other pieces of information.

The group of temporary disc management areas **20** includes a number N (which is an integer that is equal to or greater than one) of temporary disc management areas **21**. Each temporary disc management area **21** is an area to temporarily store updated management information, and stores sequential recording range information **18**, information about a temporary disc definition structure and other pieces of information.

The N temporary disc management areas **21** are updated every time any data is written on the optical disc **1**. And the last temporary disc management area #N comes to have currently the latest piece of management information on the optical disc **1**. In a write-once medium such as a BD-R, the management information cannot be rewritten, and therefore, information has to be just added to retain the latest piece of management information. That is why information is accumulated on the temporary disc management areas **21**. Information is sequentially written on these N temporary disc management areas **21** from the beginning toward the end of the group of temporary disc management areas **20** (i.e., from an inner portion of the optical disc **1** toward the outer edge thereof).

The group of temporary disc management areas **20,** including the temporary disc management areas **21,** does not always have to be included in the lead-in area **4** but may also be located anywhere else but the user data area **16,** e.g., in the lead-out area **6** or in the spare areas **17.**

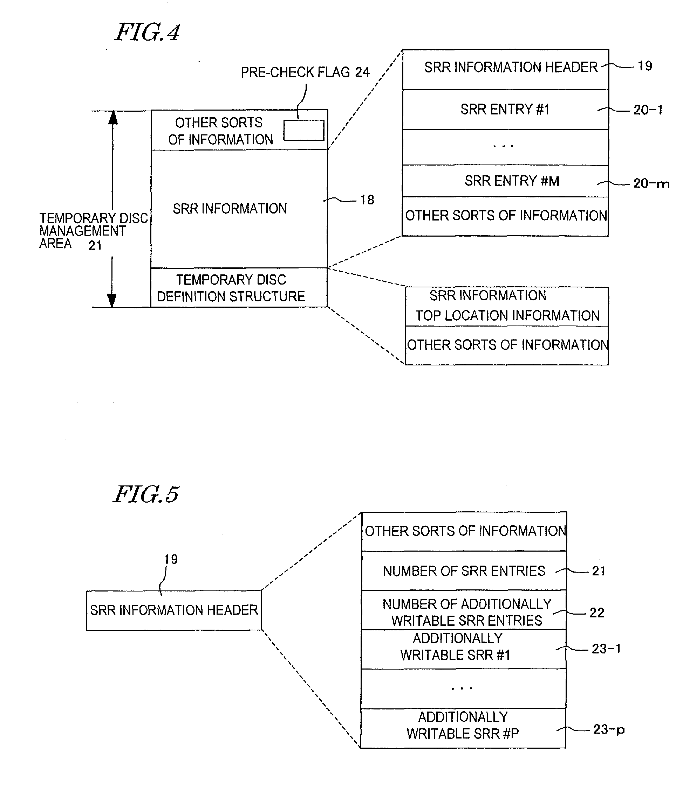

Next, the sequential recording range information **18** will be described in detail with reference to FIG. **4****,** which illustrates the data structure of the sequential recording range information **18.**

The sequential recording range information **18** includes a sequential recording range information header **19,** a number M (where M is an integer that is equal to or greater than one) of sequential recording range entries **20-1** through **20-m,** and other pieces of information.

The sequential recording range information header **19** stores information about the sequential recording range **SRR** that is assigned on the user data area **16.**

On the other hand, each of the sequential recording range entries **20-1** through **20-m** stores information about the beginning (i.e., the start address) and the last recorded address (LRA) of its associated SRR.

Optionally, a pre-check flag **24** may be provided in the temporary disc management area **21** shown in FIG. **4****.** In the example illustrated in FIG. **4****,** the pre-check flag **24** is supposed to be provided in the "other sorts of information", not the sequential recording range information **18** in the temporary disc management area **21.** This flag is used to indicate whether or not a surface check, which is performed to find a defective area, if any, on the disc before data starts to be written there, has been carried out yet. If the value of the flag indicates that the part of the storage area on which data is going to be written has already been subjected to the surface check, then the optical disc apparatus may omit the surface check processing and can shorten the time it takes to prepare for the start of writing.

FIG. **5** shows a detailed data structure of the sequential recording range information header **19,** which includes the number of sequential recording range entries **21,** the number of additionally writable sequential recording range entries **22** and a number P (where P is an integer that is equal to or greater than one) of additionally writable sequential recording range numbers **23-1** through **23-p**.

The number of sequential recording range entries **21** indicates the total number of sequential recording ranges **SRR** on the optical disc **1.** The number of additionally writable sequential recording range entries **22** indicates the number of open SRRs. And the additionally writable sequential recording range numbers **23-1** through **23-p** indicate the entry numbers of SRRs, to which data can be added, among the sequential recording range entries **20-1** through **20-m.** These entry numbers may be regarded as range definition information that defines the sequential recording ranges **SRR.**

In the example illustrated in FIG. **2****,** "5" is described as the number of sequential recording range entries **21,** "2" is described as the number of additionally writable sequential recording range entries **22,** and "3" and "5" are described as the additionally writable sequential recording range numbers **23-1** and **23-2,** respectively.

Hereinafter, an optical disc apparatus as a preferred embodiment of the present invention will be described. In the following example, the optical disc apparatus is supposed to be a BD recorder that can read and write data from/on a BD-R, on which data can be written only once. For that reason, in the following description, the "optical disc **1**" shown in portion **(a)** of FIG. **1** will be referred to herein as "BD **1**".

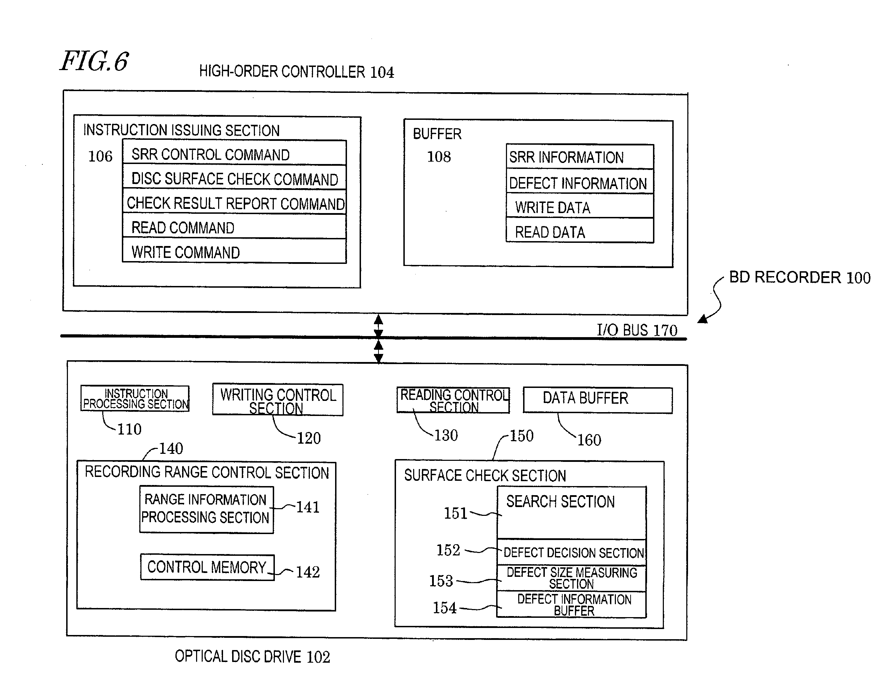

FIG. **6** illustrates the arrangement of functional blocks in a BD recorder **100**.

The operation of the BD recorder **100** will be outlined. First of all, the BD recorder **100** searches the storage area of an optical disc (typically a BD) for any defective area before actually writing data there. On detecting a servo error by the level of a servo signal that has been obtained based on the light reflected from the optical disc, the recorder **100** determines that part of the storage area where the error has occurred to be a defective area and measures the size of that defective area. And by determining the location, size and other parameters of the defective area, the recorder **100** manages the storage area based on those parameters such that no data is written on the defective area.

The BD recorder **100** locates the defective area before starting to write data, and therefore, can write data with the defective area avoided. That is why the data writing operation can get done smoothly after that. As a result, a BD recorder **100** with excellent real-time recording performance can be provided. For example, if a TV program is recorded using such a BD recorder **100**, then the probability of write errors can be reduced significantly.

On top of that, it is not until the size of the defective area is measured that the storage area is managed so that no data will be written on the defective area. That is why there is no need to waste available storage areas just to avoid the defective area. As a result, the storage area of the disc can be made full use of.

Hereinafter, the configuration of the BD recorder **100** will be described. The BD recorder **100** includes an optical disc drive **102,** a high-order controller **104,** and an I/O bus **170** that connects them together.

The high-order controller **104** is the main CPU of the BD recorder **100,** for example. The main CPU performs computation processing by executing a computer program loaded in a memory (not shown) and issues instructions based on a result of the computations to the optical disc drive **102** and other components of the BD recorder **100**. Those instructions are conveyed through the I/O bus **170** to the respective components. And those components perform their own operations in response to the instructions, thereby realizing various functions of the BD recorder **100**.

In the following description, the function of the high-order controller **104** will be described in detail first. And then it will be described how the optical disc drive **102** performs predetermined operations in accordance with the instructions issued by the high-order controller **104**.

The high-order controller **104** includes an instruction issuing section **106** and a buffer **108**. The instruction issuing section **106** issues multiple kinds of instructions to the optical disc drive **102,** which include a sequential recording range control command, a disc surface check command, a check result report command, a write command and a read command. On receiving a response to each of these instructions, the instruction issuing section **106** stores it in the buffer **108.**

The sequential recording range control command is a generic term of multiple kinds of commands to be issued to control the sequential recording range **SRR** shown in FIG. **2** and may include a sequential recording range information (SRRI) acquire command, an SRR reserve command and an SRR close command, for example.

The instruction issuing section **106** stores sequential recording range information, which has been obtained by the optical disc drive **102** in response to the SRRI acquire command, in the buffer **108.** Also, before issuing the write command to be described later, the instruction issuing section **106** issues an SRR reserve command to the optical disc drive **102** to reserve the SRR in the user data area **6** on the BD **1.** Furthermore, the instruction issuing section **106** issues the close command to the SRR reserved, thereby making that SRR write-disabled.

The disc surface check command is issued to instruct the optical disc drive **102** to detect a defect, if any, on the surface of the BD **1.** Examples of those "surface defects" include not only scratches on the surface of the optical disc **1** but also large-scale defects caused by the raised surface where a bubble such as the one shown in FIG. **19** is present. The instruction issuing section **106** issues a disc surface check command to the optical disc drive **102** as well as specifying the beginning of the range to check and determining the exact check range. In accordance with the disc surface check command, the optical disc drive **102** checks the BD **1,** thereby generating a list of defect information.

The check result report command is issued to instruct the optical disc drive **102** to report a result of the check that the optical disc drive **102** has performed on the surface of the BD **1** in accordance with the disc surface check command. Following the check result report command, the optical disc drive **102** returns a list of defect information. In response, the instruction issuing section **106** stores the list of defect information, which has been returned by the optical disc drive **102,** on the buffer **108.**

The write command is issued to instruct that data to be written (i.e., write data) that is stored in the buffer **108** be written on the BD **1.** The write command is also called "AV write command". The instruction issuing section **106** issues a write command to the optical disc drive **102** and then sends the write data to the optical disc drive **102.**

The read command is issued to instruct the optical disc drive **102** to read data from the BD **1.** On receiving the data that has been read (i.e., read data) from the optical disc drive **102,** the instruction issuing section **106** stores it in the buffer **108.**

Next, the optical disc drive **102** will be described.

The optical disc drive **102** includes an instruction processing section **110,** a writing control section **120,** a reading control section **130,** a recording range control section **140,** a surface check section **150** and a data buffer **160.**

The instruction processing section **110** interprets an instruction that has been given by the instruction issuing section **106** of the high-order controller **104** and conveys that instruction to the other components. In the following description, the instruction issuing section **106** is supposed to send an instruction to those components other than the instruction processing section **110** just for the sake of convenience. Actually, however, the instruction processing section **110** performs the processing described above, and as a result, the instruction is conveyed to those components.

The writing control section **120** controls writing data on the BD **1** in response to the write command, while the reading control section **130** controls reading data from the BD **1** in response to the read command.

On receiving the sequential recording range control instruction, the recording range control section **140** controls the sequential recording range **SRR** of the BD **1.** As used herein, the "control" means acquiring the sequential recording range information **SRRI,** reserving the SRR, closing the SRR and other sorts of processing.

Particularly if the defect size measuring section **153** (to be described later) generates a defect information list, the recording range control section **140** follows the instruction that has been given by the instruction issuing section **106** of the high-order controller **104** and manages the recording range so that no data is written in the area specified by the defect information list (e.g., a large-scale defective area produced due to the presence of a bubble). Specifically, when the instruction issuing section 106 of the high-order controller **104** issues an SRR close command to the recording range control section **140,** the recording range control section **140** adds the defective area to the list as the sequential recording range **SRR** and closes that SRR using the sequential recording range information header **19** and the sequential recording range entry **20-k** shown in FIGS. **4** and **5****.** As a result, no data will be written on that defective area anymore. Optionally, the recording range control section **140** may close the SRR automatically, no matter whether the instruction issuing section **106** has issued an instruction or not.

The recording range control section **140** includes a range information processing section **141** and a control memory **142.** The range information processing section **141** reads and writes (or updates) the sequential recording range information **SRRI** from/on the BD **1.** It should be noted that the sequential recording range information **SRRI** is actually written or updated by the writing control section **120** in accordance with the write command issued by the range information processing section **141** and that the sequential recording range information **SRRI** is actually read by the reading control section **130** in accordance with the read command issued by the range information processing section **141.** The control memory **142** retains the sequential recording range information **SRRI** that has been read or is going to be written.

In response to the disc surface check command, the surface check section **150** detects a defect, if any, on the BD **1** and generates a list of defect information.

The surface check section **150** includes a search section **151,** a defect decision section **152,** a defect size measuring section **153,** and a defect information buffer **154.**

The search section **151** searches the disc surface for a defective area while the defect decision section **152** is detecting a defect. Specifically, the search section **151** instructs an optical pickup (to be described later) to move the spot of the irradiating light beam such that the beam spot shifts a predetermined distance each time in the radial direction on the BD **1**. And every time the spot of the irradiating light beam is shifted, the search section **151** makes the defect decision section **152** perform defective area detection processing, thereby searching for a defective area. In this preferred embodiment, the search section **151** searches for a defective area before user data is written on the user data area **16.**

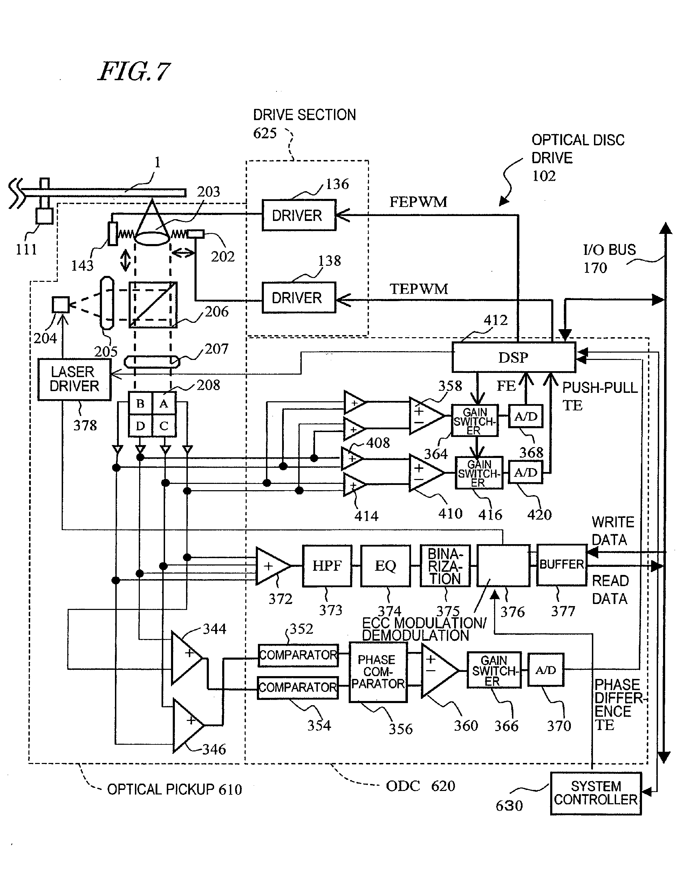

On detecting a servo error based on the light detection signal that has been supplied from the optical pickup while the search is being carried out, the defect decision section **152** determines that part of the storage area where the error has occurred to be a defective area. For example, every time the spot of the irradiating light beam is shifted by the search section **151,** the defect decision section **152** monitors the levels of the tracking error (TE) signal over a track length that is equal to or greater than one track on the BD **1** and measures the detection threshold value when the TE signal is disturbed and the length of the time during which the threshold value has been exceeded, thereby determining whether or not a servo error has occurred. This processing will be described in detail later with reference to FIGS. **7** through **9****.**

After a servo error has been detected, the defect size measuring section **153** measures the size of the defective area, thereby generating a defect information list to locate the defective area. In the defect information list, the beginning of the defective area detected (i.e., a defect start point) and its size are stored in association with each other.

The defect information buffer **154** stores the defect information list.

And the data buffer **160** temporarily stores the write data and the read data.

Hereinafter, the hardware configuration of the optical disc drive **102,** along with the correspondence to the functional blocks of the optical disc drive **102** shown in FIG. **6****,** will be described with reference to FIG. **7****.**

FIG. **7** illustrates an exemplary hardware configuration for the optical disc drive **102** of this preferred embodiment.

The optical disc drive **102** includes a disc motor **111,** an optical pickup **610,** an optical disc controller (ODC) **620,** a drive section **625** and a system controller **630.**

The system controller **630** controls the overall operation of the optical disc drive **102** in accordance with a control program installed.

The optical pickup **610** includes a light source **204,** a coupling lens **205,** a polarization beam splitter **206,** an objective lens **203,** a condenser lens **207** and a photodetector **208.**

The light source **204** is preferably a semiconductor laser diode, which emits a light beam with a wavelength of 415 nm or less in this preferred embodiment. The light beam emitted from the light source **204** is linearly polarized light, of which the polarization direction can be arbitrarily controlled by turning the light source **204** around the optical axis of the light beam emitted. The coupling lens **205** transforms the light beam that has been emitted from the light source **204** into a parallel beam, which is then incident on the polarization beam splitter **206.** The polarization beam splitter **206** has such a property as to reflect linearly polarized light that is polarized in a particular direction but to transmit linearly polarized light that is polarized perpendicularly to that particular direction. The polarization beam splitter **206** of this preferred embodiment is designed so as to reflect the light beam that has been transformed by the coupling lens **205** into the parallel beam toward the objective lens **203.** The objective lens **203** converges the light beam that has been reflected by the polarization beam splitter **206,** thereby forming a light beam spot on the storage layer of the BD **1.**

The light beam that has been reflected from the BD **1** is transformed by the objective lens **203** of the optical pickup **610** into a parallel light beam, which is then incident on the polarization beam splitter **206.** In this case, the light beam has had its polarization direction rotated 90 degrees with respect to the polarization direction of the light beam that was incident on the BD **1.** That is why the light beam is transmitted through the polarization beam splitter **206** and then incident on the photodetector **208** as it is by way of the condenser lens **207.**

The photodetector **208** receives the light that has passed through the condenser lens **207** and converts the light into an electrical signal (specifically, a current signal). The photodetector **208** shown in FIG. **7** has its photosensitive plane divided into four areas **A, B**, **C** and **D,** each of which outputs an electrical signal representing the intensity of the light received there.

To have the light beam spot follow the target track on the storage layer of the BD **1** that is being turned at a predetermined velocity by the disc motor **111,** a tracking error (TE) signal representing the magnitude of a tracking error and a focus error (FE) signal representing the magnitude of a focus error need to be generated based on the light beam that has been reflected from the BD **1.** These signals are generated by the ODC **620.**

As for the TE signal, the optical disc drive **102** generates a TE signal by the push-pull method during writing and by the phase difference method during reading, respectively.

The optical disc drive **102** of this preferred embodiment determines, by the level of the TE signal, whether or not a servo error has occurred before data is written on the BD **1.** That is why the TE signal needs to be generated based on a light detection signal representing the light that has been reflected from an area where no data has been written yet. For that reason, as in writing, the TE signal is preferably generated by the push-pull method. In the following description, the processing of generating the push-pull TE signal will be described first.

An adder **408** of the ODC **620** outputs a sum signal of the areas **B** and **D** of the photodetector **208,** while an adder **414** outputs a sum signal of the areas **A** and **C** of the photodetector **208.** A differential amplifier **410** receives the outputs of these two adders **408** and **414** and outputs a push-pull TE signal representing their difference. A gain switcher **416** adjusts the amplitude of the push-pull TE signal to a predetermined one (gain). An A/D converter **420** converts the push-pull TE signal supplied from the gain switcher **416** into a digital signal and passes it to a DSP **412.**

On the other hand, the phase difference TE signal can be obtained in the following manner. Specifically, the adder **344** may output a sum signal A+D, of which the magnitude corresponds with the sum of the outputs of the areas **A** and **D,** while the adder **346** may output a sum signal B+C, of which the magnitude corresponds with the sum of the outputs of the areas **B** and **C,** for example. Alternatively, other signals may also be generated if the sums are calculated differently.

Comparators **352** and **354** digitize the output signals of the adders **344** and **346,** respectively. A phase comparator **356** compares the phases of the output signals of the comparators **352** and **354** to each other. A differential amplifier **360** receives the output signal of the phase comparator **356** and outputs a phase difference TE signal, which is used to perform a control operation that makes the light beam follow the right track on the BD **1**.

A gain switcher **366** adjusts the amplitude of the phase difference TE signal to a predetermined value. An A/D (analog-to-digital) converter **370** converts the phase difference TE signal supplied from the gain switcher **366** into a digital signal.

The FE signal is generated by the differential amplifier **358**. The FE signal may be detected by any methodby an astigmatism method, a knife edge method or even a spot sized detection (SSD) method. The circuit configuration needs to be changed appropriately according to the detection method adopted. A gain switcher **364** adjusts the amplitude of the FE signal to a predetermined value. An A/D converter **368** converts the FE signal supplied from the gain switcher **364** into a digital signal.

A DSP **412** controls the drive section **625** based on the TE and FE signals. A control signal **FEPWM** for focus control and a control signal **TEPWM** for tracking control are respectively output from the DSP **412** to the drivers **136** and **138** of the drive section **625.**

In accordance with the control signal **FEPWM,** the driver **136** drives the focus actuator **143,** which moves the objective lens **203** substantially perpendicularly to the storage layer of the BD **1.** On the other hand, in accordance with the control signal **TEPWM,** the driver **138** drives the tracking actuator **202,** which moves the objective lens **203** substantially parallel to the storage layer of the BD **1.** It should be noted that the drive section **625** further includes a driver (not shown) for driving a transport stage on which the optical pickup **610** is mounted. By driving the transport stage with a voltage applied to the driver, the optical pickup **610** can move to any arbitrary location in the radial direction.

Next, a configuration for reading data will be described.

An adder **372** adds together the respective outputs of the areas **A, B, C** and **D** of the photodetector **208,** thereby generating an all sum signal (A+B+C+D), which is then input to the HPF **373** of the ODC **620.**

The all sum signal has its low frequency component filtered out by the HPF **373,** is passed through an equalizer section **374,** is binarized by a binarization section **375,** is subjected to PLL, error correction, demodulation and other processing by an ECC modulator/demodulator **376** and then is temporarily stored in a buffer **377**. The capacity of the buffer **377** has been determined with various playback conditions taken into account.

The data in the buffer **377** is read at the timing of playing back video, for example, and then output as read data to a host computer **104** by way of an I/O bus **170.** In this manner, video or any other type of data can be played back.

Next, a configuration for writing data will be described.

The write data stored in the buffer **377** is provided with an error correction code by the ECC modulator/demodulator **376** to be encoded data. Subsequently, the encoded data is modulated by the ECC modulator/demodulator **376** to be modulated data, which is then input to a laser driver **378.** And the laser driver **378** controls the light source **204** based on the modulated data, thereby modulating the power of the laser beam.

The correspondence between FIGS. **6** and **7** will be described.

The instruction processing section **110** shown in FIG. **6** corresponds to the system controller **630** shown in FIG. **7****.** Meanwhile, the functions of the recording range control section **140** and the surface check section **150** shown in FIG. **6** are performed by the DSP **412.**

The function of the writing control section **120** shown in FIG. **2** is also performed by the system controller **630** that receives data to be written and instructs how and where to write it. Also, the writing control section **120** includes the tracking signal generating section for generating the push-pull TE signal in the ODC **620** (including the adders **408**, **414**, differential amplifier **410**, gain switcher **416** and A/D converter **420**) and the focus signal generating section for generating the FE signal (including the adder, differential amplifier **358**, gain switcher **364** and A/D converter **368**). The writing control section **120** further includes the drive section **625**. And the writing control section **120** includes even the ECC modulator/demodulator **376** and the laser driver **378**.

The function of the reading control section **130** shown in FIG. **6** is also performed by the system controller **630** that instructs how and where to read data. The reading control section **130** includes the components **372** through **376** shown in FIG. **7**. The reading control section **130** also includes the components **354** through **370** for generating a phase difference TE signal and the focus signal generating section for generating an FE signal. The reading control section **130** further includes the drive section **625.**

The data buffer **160** shown in FIG. **6** corresponds to the buffer **377** shown in FIG. **7****.**

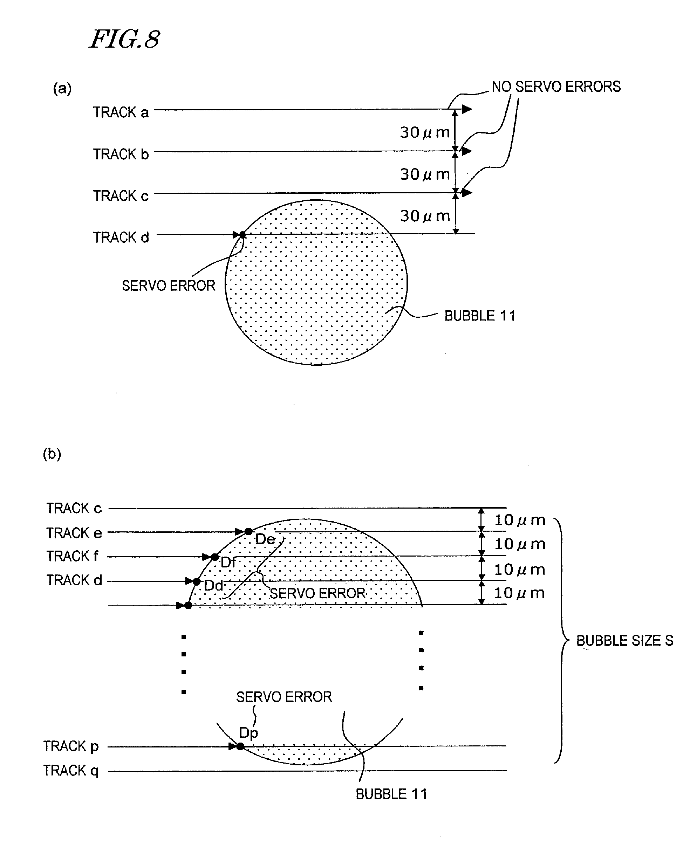

Hereinafter, it will be described how the BD recorder **100** of this preferred embodiment gets its processing done. First of all, the processing of detecting a defective area and the processing of measuring the size of the defective area will be outlined with reference to FIGS. **8** to **10****.** This is the very processing unique to the BD recorder **100** of this preferred embodiment. In the following example, an area with the core of a bubble and its surrounding area are supposed to be exemplary defective areas.

FIGS. **8(a)** and **8(b)** are schematic representations illustrating the concept of the disc surface check processing of this preferred embodiment. In this example, the checking start point is supposed to be located on the track **a** of the BD **1** shown in FIG. **8(a)** and the check range is supposed to have a breadth of 300 µm as measured from the track **a.** In this check range, an area with a bubble core and its surrounding area are supposed to be included as indicated by the bubble **11.**

The disc surface check processing may be carried out after the BD recorder **100** has been loaded with the BD **1** and before data starts to be written on the BD **1.**

First, the search section **151** controls the optical pickup **610** such that the track **a** is irradiated with the light beam. When the optical pickup generates a light detection signal based on the light beam that has been reflected from the BD **1,** the adders **408** and **414,** differential amplifier **410,** gain switcher **416** and A/D converter **420** generate a push-pull TE signal based on the light detection signal.

The defect decision section **152** determines, by the level of the push-pull TE signal that has been generated during the search, whether or not a servo error has occurred.

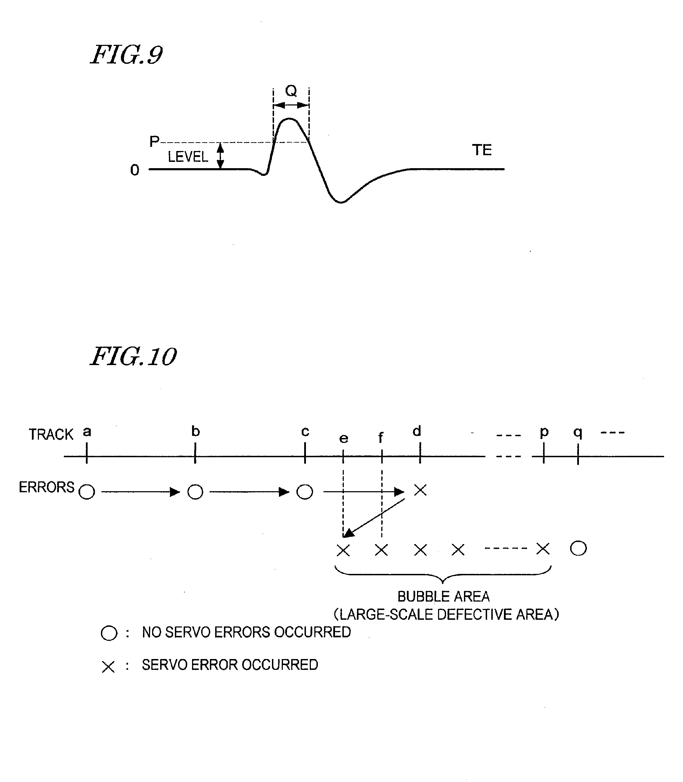

The servo error may be detected in the following manner, for example. FIG. **9** shows the waveform of a tracking error signal with a servo error. The defect decision section **152** monitors the levels of the TE signal for a period of time that corresponds to slightly over one round of the target track on the BD **1.** Then, the defect decision section **152** determines whether or not that TE signal includes a servo error component caused by a track jump. For example, the defect decision section **152** may determine, by the length of the period of time **Q** it takes for the TE signal, which has once exceeded a predetermined detection threshold value (or threshold level) **P** (where P > 0), to get equal to or smaller than P again, whether or not a servo error has occurred. If the period of time **Q** is longer than a predetermined value, the defect decision section **152** determines that a servo error has occurred. On the other hand, if the period of time **Q** is equal to or smaller than the predetermined value, then the defect decision section **152** determines that no servo error has occurred. Alternatively, it can also be determined, by the length of the period of time **Q'** it takes for the TE signal, which has once gone equal to or smaller than another predetermined detection threshold value (or threshold level) **P'** (where P' < 0), to become equal to or greater than P' again, whether or not a servo error has occurred. It should be noted that the defect decision section **152** does not make a decision on any other factor such as the intensity of the reflected light.

Now take a look at FIG. **8(a)** again. As no servo error occurs in the push-pull TE signal from the track **a,** the search section **151** shifts the light beam spot onto the next track **b,** which is 30 µ m away from the track **a,** thereby determining whether or not a servo error occurs in the push-pull TE signal from the track **b.** As no servo error occurs, either, in the push-pull TE signal from the track **b,** the light beam spot is further shifted onto the next track **c,** which is another 30 µm away from the track **b.** However, as no servo error occurs again as for the track **c,** the light beam spot is once again shifted onto the next track **d,** which is another 30 µm away from the track **c.**

As there is a bubble **11** on the track **d**, the defect decision section **152** detects a servo error in the push-pull TE signal from the track **d**. Once an error has been detected, the defect decision section **152** regards that portion of the storage area where the error has occurred as a defective area. Optionally, a more reliable decision may also be made by reacquiring a push-pull TE signal from the track **d.**

If a servo error has been detected by the defect decision section **152,** the search section **151** controls the optical pickup **610** so as to shift the light beam spot backward by a distance of 20 µm, for example, which is shorter than 30 µm that is the track jump interval. Then, the defect decision section **152** determines whether or not there is a servo error on a track at that location.

FIG. **8(b)** shows a relation between a track **e** that is located 20 µm behind the previous track and the bubble **11.** There are tracks **e** and **f** between the tracks **c** and **d.** If a servo error **Dd** has been detected from the track **d**, the defect decision section **152** again determines whether or not a servo error occurs on the track **e.** In the example illustrated in FIG. **8(b)****,** as the bubble **11** is also present on the track **e,** the defect decision section **152** detects a servo error **De** in the track **e,** too. As a result, it is determined that the beginning of the bubble **11** should be located between the track **c** where no servo error has occurred and the track **e.**

After that, the search section **151** shifts the light beam spot stepwise on a 10 µm basis in the radial direction, i.e., from the track **e** toward the track **d**, while the defect decision section **152** determines, on each of those tracks, whether or not a servo error occurs. This shift distance is shorter than 30 µm that is the interval between the tracks **a** and **b** and between the tracks **b** and **c**, and therefore, the bubble **11** can be examined precisely. In the example illustrated in FIG. **8(b)****,** the defect decision section **152** continues to detect servo errors from the track **e** through the track **p**.

However, when the search section **151** shifts the light beam spot to the track **q,** no servo error will be detected anymore. As a result, it is determined that the bubble **11** covers the range that spreads from the track **e** through the track **q** at least. When no servo errors are detected anymore, the search section **151** may set the light beam spot shift distance to be 30 µm again and may search the remaining tracks for any servo errors through the end of the check range that has been specified in accordance with the disc surface check command.

The defect size measuring section **153** calculates the size **S** of the bubble **11** based on the breadth of the range including those tracks from which servo errors have been detected. More specifically, the defect size measuring section **153** calculates the size **S** of the bubble by multiplying the interval of 10 µm between each pair of tracks searched by the number of those tracks searched that fall within the range starting with the beginning of the bubble **11** and ending with the track **p** where an error has been detected for the last time. The bubble size **S** thus obtained has been calculated as representing the range from the track **e** through the previous track for the track **q** where no servo error has occurred.

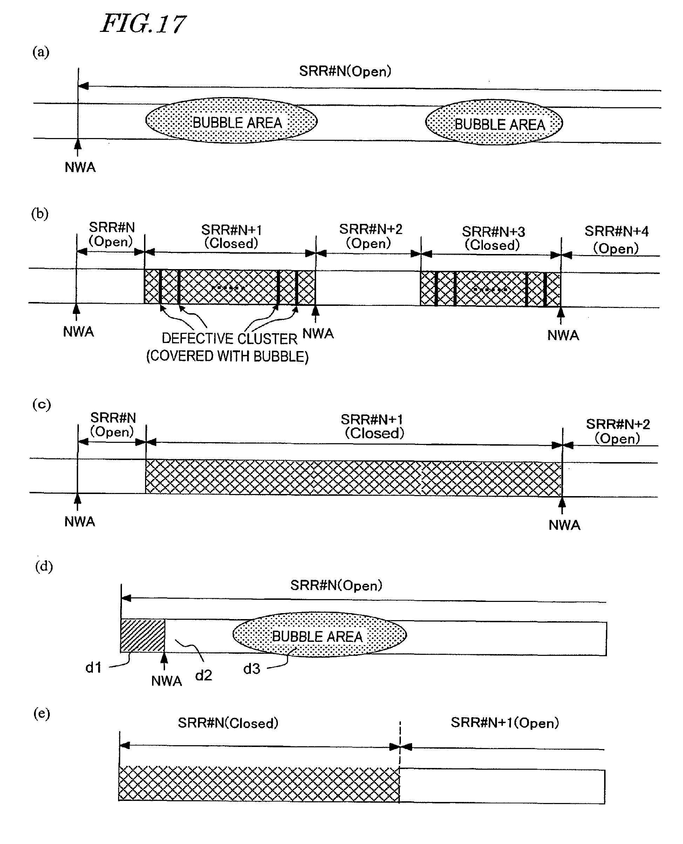

FIG. **10** shows the time series of the respective servo error detection processing steps that have been described with reference to FIGS. **8(a)** and **17(b)**. First, the track **a** and the following tracks that are arranged at regular intervals of 30 µm are sequentially searched for any servo error. Once a servo error is detected from the track **d**, the checkpoint is shifted back to the track **e.** Then, the track **e** and the tracks that follow it are searched for any servo error at narrower regular intervals of 10 µm. And if a servo error is detected from the track **p** for the last time and if no servo errors are detected anymore from the track **q,** then the defect size measuring section **153** determines that the bubble **11** is present between the track **e** in which a servo error has occurred and the track **q** from which no servo errors are detected anymore. In this manner, the size of the bubble **11** (i.e., the size of the defective area) can be substantially determined.

It should be noted that the track **e** is regarded as being located closest to the track **a** in which a servo error has occurred and where the search of a defective area is started. On the other hand, the track **q** is regarded as a track from which no servo error is detected for the first time since the servo error was detected. Consequently, the beginning of the bubble **11** should be located between the tracks **c** and **e** and the end of the bubble **11** should be located between the tracks **p** and **q**.

In the processing described above, once a servo error has been detected from the track **d**, the checkpoint is supposed to be shifted back by 20 µm to the track **e** and then the search is supposed to be resumed there at regular intervals of 10 µm. Alternatively, the checkpoint may also be shifted back to the track **c** and the search may be restarted from that track **c** at regular intervals of 10 µm. This is because no servo error has been detected from the track c and therefore, the track **c** can be located accurately.

In the foregoing description, the defective area search and the defect decision are supposed to be carried out in parallel with each other. However, there are various other defect decision methods. For example, a TE signal may be acquired once from a defect check range specified, a search may be performed using the waveform data of the TE signal, and then the defect decision may be made. According to such a method, there is no need to go back from the track **d** to the track **e** or distinguish a rough search from a fine search, either. Optionally, the light beam spot may be shifted at a fixed interval of 30 /.1 m, too.

Once the beginning and range of the bubble **11** have been determined, the range information processing section **141** updates the sequential recording range information (SRRI) **18,** records the bubble **11** as a single SRR and closes that SRR. As a result, the number of sequential recording range entries **21** increases by one in the sequential recording range information header **19** shown in FIG. **5****.** But the number of additionally writable sequential recording range entries **22** does not increase and the numbers associated with the SRRs are not described as the additionally writable sequential recording range numbers **23-1** to **23-p,** either.

It should be noted that if every track were searched for any servo error, then it would take a lot of time to get measurements done on the bubble area. That is why if no servo error has been detected yet, the tracks are checked every 30 µm and after a servo error has been detected, the tracks are checked every 10 µm. As a BD has a track pitch of 0.32 µm, the check to be done every 10 µm corresponds to a check to be done every 30 tracks (= 10/0.32). As a result, the size of the bubble area can be measured much more quickly than a situation where every track is checked one by one.

In this manner, the intervals between each pair of tracks to be checked are changed before and after a servo error has been detected. In the following description, the broader interval (which is 30 µm in the example described above) will be referred to herein as a "rough search interval" and the narrower interval (which is 10 µm in the example described above) will be referred to herein as a "fine search interval".

In the example described above, the rough search interval is supposed to be 30 µm and the fine search interval is supposed to be 10 µm. However, each of these intervals may be changed into either an even broader interval if the size of the bubble area should be measured more quickly or an even narrower interval if the size of the bubble area should be measured more precisely.

Optionally, as for just some of those tracks, every track may be searched for any servo error. For example, once the track **q** in which no servo errors occur anymore is found as a result of the 10 µm-by-10 µm track checks, every intervening track between that track **q** and the track **p** where a servo error occurred for the last time may be searched for any servo error. In that case, the size of the bubble **11** can be measured more accurately.

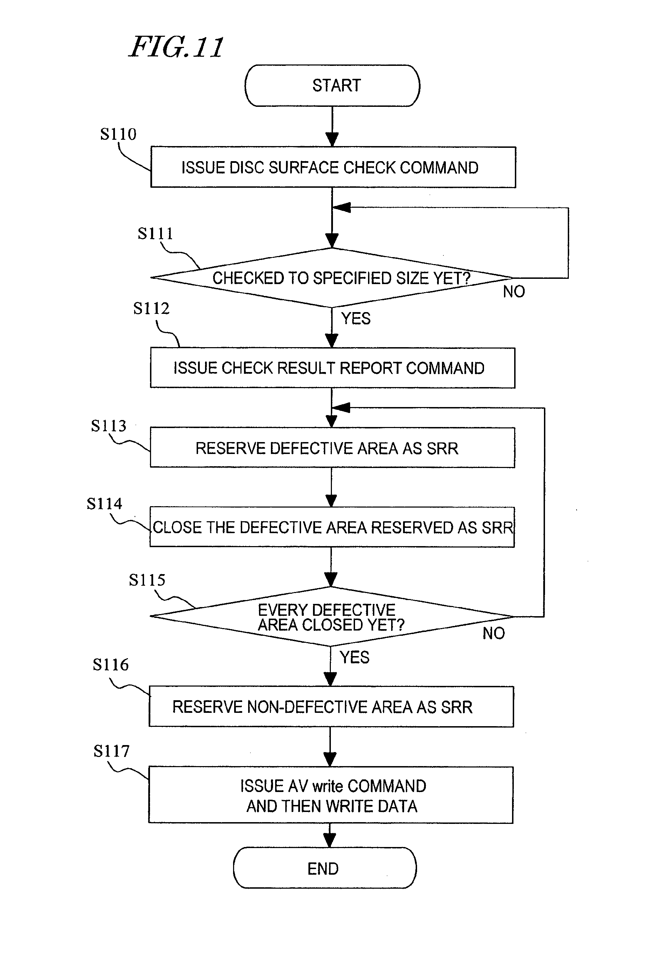

Hereinafter, it will be described with reference to FIGS. **11** through **16** exactly how the BD recorder **100** operates. In the following description, a defective area produced by a scratch and a defective area produced by a bubble will be collectively referred to herein as "defective areas". It does matter exactly how big the defective area is. But some defective area produced by a bubble may have as huge a scale as covering several hundreds of tracks.

Now the operation of the BD recorder **100** will be described with the roles of the high-order controller **104** and the optical disc drive **102** clarified. First of all, when the BD recorder **100** is loaded with a BD **1**, the high-order controller **104** issues a disc surface check command to the optical disc drive **102** before data starts to be written. In response to that command, the optical disc drive **102** checks the recordable area for any defect. In this case, if the size of the area to check has been specified, then the optical disc drive **102** checks only a part of the recordable area with that specified size for any defect.

If any defect has been found during the check, then the optical disc drive **102** does not report it to the high-order controller **104** each time but draws up a data list to locate the defective area by itself as a result of the check (which will be referred to herein as a "defect information list") and keeps updating the list each time. And it is not until the high-order controller **104** issues a check result report command upon the completion of the check that the optical disc drive **102** sends the defect information list to the high order controller **104**.

By reference to that defect information list, the high-order controller **104** instructs the optical disc drive 102 to close each and every defective area, assign some or all of those defective areas, and write data there.

To close a defective area, not only the physical address of the defective area but also the logical address thereof are required. Even after the defective area has been closed, the logical address of the defective area is still assigned as the logical address of a closed area to the same defective area. Also, before and after the defective area is closed, the correspondence between the physical and logical addresses is never changed.

If no logical addresses were assigned to the defective area so that the logical addresses of the two areas that precede and succeed the defective area are continuous with each other, then the correspondence between the physical and logical addresses would change before and after the defective area. In that case, every time any defective area is encountered, correspondence data to convert a physical address into a logical one, or vice versa, would be required. Then, a memory to store that data should be provided and address conversion processing should also be performed. Consequently, additional pieces of hardware should be provided and the processing to get done by either the high-order controller or the optical disc drive would get complicated.

Compared to such overly complicated processing, the processing of this preferred embodiment can get done by the BD recorder **100** without providing any additional piece of hardware. On top of that, the processing load on either the high-order controller or the optical disc drive can be lightened, too.

Hereinafter, it will be described more specifically with reference to FIG. **11** exactly how the BD recorder **100** operates.

FIG. **11** shows the procedure of write processing to get done by the BD recorder **100** so that no data is written on any defective area. This procedure of write processing is performed in a situation where writing on the BD **1** is started as soon as the BD recorder **100** is loaded with the BD **1**.

First, in Step **S110**, the instruction issuing section **106** of the high-order controller **104** specifies a checking start point **LBA** and a check size and issues a disc surface check command to the optical disc drive **102**.

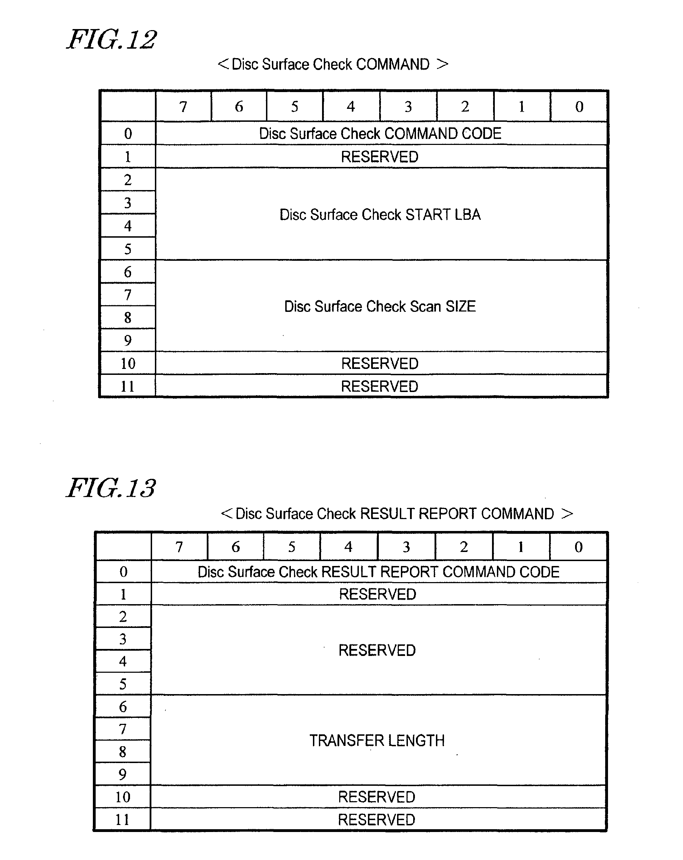

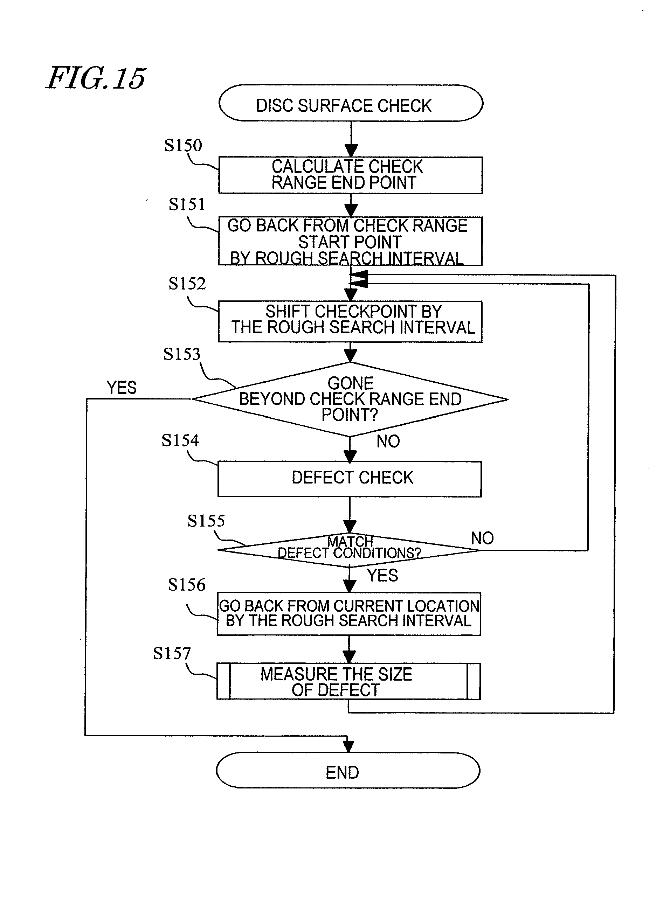

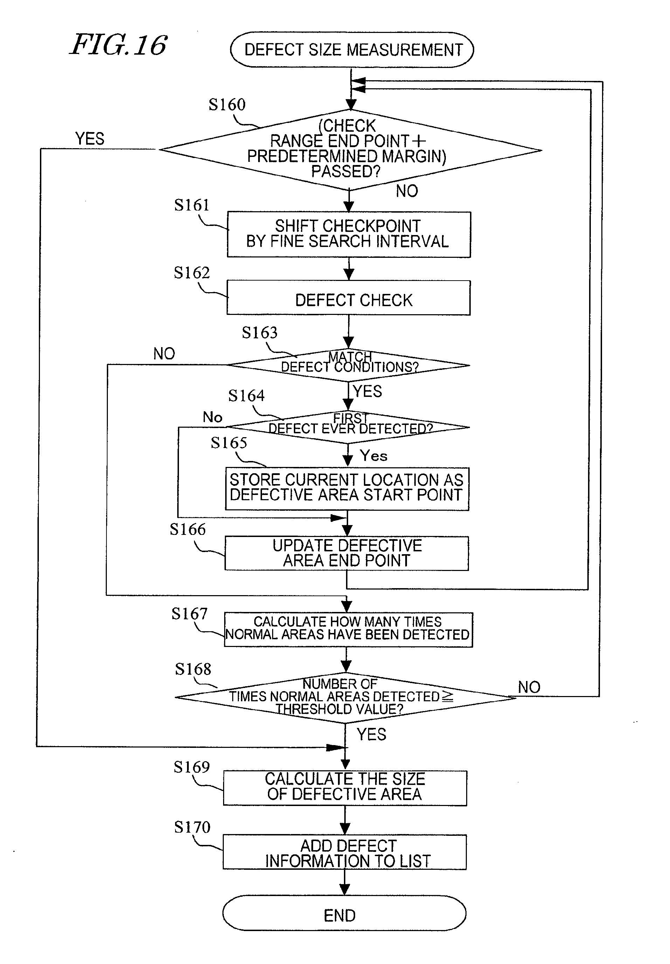

FIG. **12** shows an exemplary format for a disc surface check command. First of all, the proper code described on the zeroth row indicates that this is a disc surface check command. After that, the checking start point **LBA** is specified in the range of the second through fifth rows and the check size is specified in the range of the sixth through ninth rows. The area designated by the checking start point **LBA** and the check size may be the entire surface of the BD **1**, for example. And if the data length is known in advance, the designated area will be the area in which the data can be stored. On receiving such a disc surface check command, the search section **151** of the surface check section **150** starts checking the disc surface. The disc surface checking processing will be described in detail later with reference to FIGS. **15** and **16**.

Next, in Step **S111**, the instruction issuing section **106** issues a status check command to check the status of operation of the optical disc drive **102** and then determines, by the report returned, whether or not the optical disc drive **102** has checked a part of the disc surface to the specified size. And the instruction issuing section **106** keep monitoring the status of the optical disc drive **102** until the check gets done. As the checking process advances, a defective area may be detected. Then, a defect information list is generated. When another defective area is encountered, that defect information list will be updated. And when the check is completed, the process will advance to the next processing step **S112**.

In Step **S112**, the instruction issuing section **106** issues a disc surface check result report command to the surface check section **150.**

FIG. **13** shows an exemplary format for a disc surface check result report command. The proper code described on the zeroth row indicates that this is a disc surface check result report command. After that, the data length (i.e., transfer length) of the check result to be reported is specified in the range of the sixth through ninth rows.

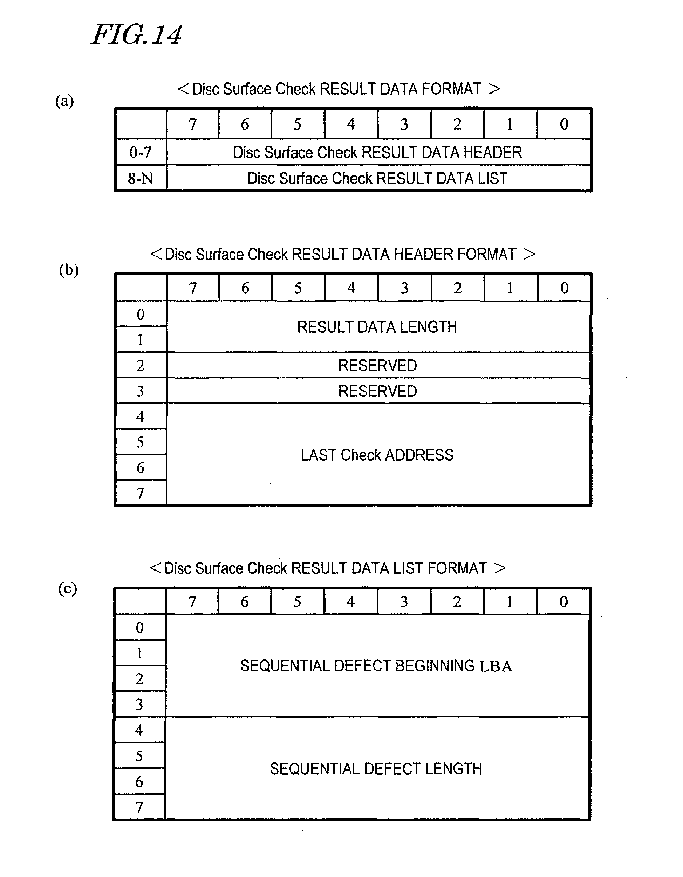

On the other hand, FIGS. **14(a)** to **14(c)** show an exemplary format for the check result to be reported. As shown in FIG. **14(a)****,** the range of the zeroth through seventh rows represents a proper header and the data list of the check result (i.e., the defect information list) is specified in the range of the eighth through N^{th} rows.

FIG. **14(b)** shows the data structure of the header. Specifically, the address of the track that has been checked for the last time is described in the range of the fourth through seventh rows.

FIG. **14(c)** shows the data structure of the defect information list, in which the beginning **LBA** and the length of a sequential defect are described. Specifically, the beginning **LBA** of the sequential defect is described in the range of the zeroth through third rows, while the length of the sequential defect (i.e., the size of the sequential defective area) is described in the range of the fourth through seventh rows. The instruction issuing section **106** acquires a defect information list and stores it as defect information in the buffer **108**.

Now take a look at FIG. **11** again. In Step **S113,** the instruction issuing section **106** issues an SRR reserve instruction to the recording range control section **140** with respect to the defective area located by the defect information that is stored in the buffer **108.** As a result, the range information processing section **141** of the recording range control section **140** reserves that area as a sequential recording range **SRR** and updates the sequential recording range information **SRRI.**

Next, in Step **S114,** the instruction issuing section **106** issues an instruction that the reserved SRR be closed to the recording range control section **140.**

Then, in Step **S115**, the instruction issuing section **106** determines whether or not every defective area listed in the defect information that is stored in the buffer **108** has been closed yet. If the answer is YES, the process advances to Step **S116.** At that point in time, every area listed in the defect information that is stored in the buffer **108** has been additional write disabled. On the other hand, if not every defective area has been closed yet, then the process goes back to the processing step **S113** to perform the same series of processing steps all over again until every defective area has been closed.

When every defective area has been closed, the instruction issuing section **106** instructs that the pre-check flag **24**, indicating that the surface of the optical disc has been checked completely, be written in the temporary disc management area shown in FIG. **4**. It should be noted that if it has been instructed in Step **S111** that the entire surface of the disc be checked, then the surface check section **150** may write the pre-check flag **150** when the entire surface of the disc has been checked.

Then, in Step **S116**, the instruction issuing section **106** issues an instruction that the remaining SRRs, other than the defective areas closed, be reserved. In response, the range information processing section **141** reserves the designated ranges as sequential recording ranges **SRR**, thereby updating the sequential recording range information **SRRI**.

Finally, in Step **S117**, the instruction issuing section **106** issues an AV write command instructing that data be written on the SRRs reserved, and at the same time, the write data is output from the buffer **108** to the optical disc drive **102**. In response, the writing control section **120** writes the write data, which has been accumulated in the data buffer **160**, on the SRRs that have been designated by the write command .

In FIG. **11**, the respective processing steps described above are illustrated as forming a single series of processing steps. However, this does not mean that these processing steps always need to be carried out continuously. Alternatively, the processing steps **S110** through **S115** may be carried out when the BD **1** is loaded and the remaining processing steps **S116** and **S117** may be carried out when the write processing is actually started, for example. That is to say, before data starts to be written, the storage area just needs to be searched for any defective area, a defect information list needs to be drawn up, and the defective areas designated by the defect information list need to be closed. As used herein, "before data starts to be written" means either "before data is written for the first time on a blank disc" or "before additional data is written on a non-blank disc on which data has already been written in some part of the storage area.

FIG. **15** shows the procedure of the disc surface check processing. The processing to be described below is carried out mainly by the components included in the surface check section **150** of the optical disc drive **102.**

First of all, in Step **S150,** the search section **151** calculates the check range end point based on the check range start point and the check range size that have been specified by the high-order controller **104** and saves it in the defect information buffer **154.**

Next, in Step **S151**, the search section **151** shifts the beam spot location of the light beam backward from the check range start point to the location, of which the address is smaller by the rough search interval of 30 µm. The beam spot location is shifted back to such a location, of which the address is smaller than the check range start point (i.e., the checking start point **LBA**) in order to avoid an unwanted situation where the check cannot be started because the checking start point specified by the high-order controller **104** is in a defective area. It should be noted that the magnitude of shift described above is just an example and could be changed appropriately if necessary.

Next, in Step **S152**, the search section **151** shifts the beam spot location of the light beam from the start point of the check range to a location, of which the address increases by the rough search interval.

Then, in Step **S153,** the search section **151** determines whether or not the current location has gone beyond the end point of the check range. If the answer is NO, the process advances to Step **S154** to continue the processing. On the other hand, if the answer is YES, then the disc surface check process ends.

In Step **S154,** the defect decision section **152** monitors the levels of the tracking error (TE) signal for a period of time corresponding to one round of the target track or even a greater track length, thereby checking the TE signal for any disturbance (i.e., any defect).

Next, in Step **S155,** the defect decision section **152** determines whether or not the detection threshold value when the TE signal is disturbed and the amount of time it has taken to exceed the threshold value match the predetermined defect conditions. As used herein, the defect conditions may be defined as the predetermined detection threshold value **P** shown in FIG. **9** and the length of the time period **Q** it has taken to get equal to or smaller than P. If the answer is YES, the process advances to Step **S156**. Otherwise, the process goes back to the processing step **S152**.

In Step **S156**, the search section **151** shifts the checkpoint such that the light beam spot has its address decreased by the rough search interval compared to the current location.

Next, in Step **S157**, the defect size measuring section **153** measures the size of the defective area. After that, the process goes back to the processing step **S152**.

Hereinafter, it will be described in further detail with reference to FIG. **16** how the defect size measuring section **153** measures the size of a defective area (i.e., the processing step **S157** shown in FIG. **15**).

FIG. **16** shows the procedure of the defective area size measuring processing.

First, in Step **S160**, the defect size measuring section **153** determines whether or not the,current location has passed a location that is defined by the sum of the check range end point and a predetermined margin. As used herein, the "predetermined margin" is a correction value to be added as a margin in order to accurately calculate the size of a defective area that is located in the vicinity of the end point of the check range. In this example, the predetermined margin is supposed to be a threshold value for recognizing a number of normal areas that have been detected consecutively as such. For example, the number of those normal areas detected consecutively may be three. If the current location has not yet passed the location that is defined by the sum of the check range end point of the normal area and the predetermined margin, then the process advances to Step **S161** to continue the processing. On the other hand, if the current location has already passed that location, then the process jumps to Step **S169** in which the size of the defective area is determined. It should be noted that the predetermined margin described above is just an example and could be changed appropriately.

In Step **S161,** the defect size measuring section **153** shifts the checkpoint in such a direction in which the address increases by the fine search interval. As can be seen easily from portions **(a)** and **(b)** of FIG. **1****,** that shift direction is indicated by the arrow pointing from an inner portion of the BD **1** toward the outer edge thereof.

Next, in Step **S162,** the defect decision section **152** checks the current location for any defect. And in the next processing step **S163,** the defect decision section **152** determines whether or not the TE signal satisfies the defect conditions. These processing steps **S162** and **S163** are the same as the processing steps **S154** and **S155** described above.

If the defect decision section **152** has determined that the defect conditions are satisfied, then it means that the current location has a defect, and therefore, the process advances to a series of defect recording processing steps **S164** through **S166**. On the other hand, if the defect decision section **152** has not determined that the defect conditions are satisfied, then the process advances to normal area determining processing steps **S167** and **S168.**

In Step **S164,** the defect size measuring section **153** determines whether or not this is the first time that any defect has been detected since the defect size measurement was started. If the defect has been detected for the very first time, the process advances to Step **S165.** On the other hand, if the defect has been detected for the second time or a greater number of times, then the process advances to Step **S166.**

In Step **S165,** information about the current location is stored as the defective area start point in the defect information buffer **154.** If the check range start point has not been passed yet, then the process goes back to the processing step **S160** to shift the light beam spot to the next checkpoint.

Next, in Step **S166**, the defect size measuring section **153** stores the information about the current location as the defective area end point in the defect information buffer **154**. As a result, the information about the defective area end point is updated. After that, the process goes back to the processing step **S160**. By performing the same series of processing steps that start at the processing step **S160** all over again, the processing step **S166** is carried out again. The defect information buffer **154** functions as a working memory. Every time the processing step **S166** is performed, a new piece of information about the defective area end point is stored in the defect information buffer **154**.

Next, the normal area determining processing steps **S167** and **S168** will be described. The processing step **S167** and the ones that follow it define what type of processing should be done if the defect conditions failed to be satisfied. In a situation where a defect has been detected based on a servo error but where no servo error has been detected from a certain track, this processing is carried out to determine whether or not that track has become a defect-free normal area.

Specifically, in Step **S167**, the defect size measuring section **153** calculates the number of times the normal areas have been detected consecutively. As used herein, "the number of times the normal areas have been detected consecutively" means the number of times tracks with no servo errors have been detected consecutively.

Next, in Step **S168**, the defect size measuring section **153** determines whether or not the number of times of consecutive detection of the normal areas has exceeded a threshold value. In this example, the threshold value is supposed to be three. This means that if normal areas have been detected three times in a row, then it is determined that the current area is a normal area.

If the number of times of consecutive detection of the normal areas is equal to or greater than the threshold value, the process advances to Step **S169,** which means determining that the checkpoint has gone beyond the defective area. On the other hand, if the number of times of consecutive detection of the normal areas is less than the threshold value, then the process goes back to the processing step **S160,** which means determining that the checkpoint has not yet gone beyond the defective area.

In Step **S169,** the defect size measuring section **153** calculates the size of the defective area based on the locations of the defective area start and end points. In this case, if the defective area start point is located ahead of (i.e., has a smaller address than) the check range start point, then the check range start point is regarded as the defective area start point. On the other hand, if the defective area end point is located beyond (i.e., has a larger address than) the check range end point, then the size of the defective area is calculated with the check range end point regarded as the defective area end point. Then, in Step **S170,** a list in which the locations of the defective area start and end points are associated with the sizes of the defective area is stored in the defect information buffer **154.** By performing these processing steps, the size of the defective area can be measured.

According to the processing shown in FIGS. **15** and **16****,** if there is any defective area such as a bubble area, then the location and size of that area can be determined.

In the processing shown in FIGS. **15** and **16****,** an area that is slightly broader than the check range specified by the high-order controller **104** may be checked for any defect. This can be seen easily from the description of the processing step **S160** (see FIG. **16**). The processing step **S160** has been described on the supposition that the check range end point has been passed. However, the same can said about the check range start point, too. That is to say, the defect check may also be started from a location that is ahead of the check range start point by approximately the rough search interval, for example.

FIG. **17(a)** is a schematic representation illustrating a user data area with bubble areas. This may be a situation where the locations and sizes of those bubble areas have been determined and the processing step **S116** shown in FIG. **11** is ready to be started after the BD recorder **100** has just been loaded with a blank BD **1,** for example.

On the other hand, FIG. **17(b)** is a schematic representation illustrating a user data area where bubble areas have been assigned as sequential recording ranges **SRR** and the SRRs have already been closed. By performing this processing step, data can be written with defective areas avoided. As described above, this processing step is carried out in accordance with the instruction that has been issued by the instruction issuing section **106** to the recording range control section **140**. The same statement will also apply to the processing to be described later with reference to FIG. **17**.

As can be seen easily from FIG. **17(b)**, the sizes of the SRRs assigned are not fixed but varied according to those of the defective areas. Consequently, the recordable area can be used effectively.

Optionally, depending on whether or not the size of the recordable area intervening between two bubble areas (e.g., SRR # (N+2) shown in FIG. **17** **(b**)) is equal to or smaller than a predetermined reference value, it may be determined whether that recordable area should be closed or not. Specifically, if the size of that recordable area is equal to or smaller than the predetermined reference value, the recordable area, as well as the bubble areas, may be closed. In that case, that recordable area is closed simultaneously with the bubble areas that should have been recordable ones. On the other hand, if the size of that recordable area is greater than the predetermined reference value, only the bubble areas are closed but that recordable area is not.

FIG. **17(c)** is a schematic representation illustrating a user data area where not only the two bubble areas but also the recordable area between them have been closed all together. Suppose the predetermined reference value is 10 clusters and the area size of SRR #(N+2) shown in FIG. **17(b)** is equal to or smaller than that size. In that case, the series of areas corresponding to SRR #(N+1) through SRR #(N+3) shown in FIG. **17(b)** is reserved as a single sequential recording range SRR # (N+1) as shown in FIG. **17(c)**, which is then closed. As a result, the number of times a seek operation needs to be done on a recordable area while data is going to be written there can be reduced, and therefore, a seek operation to reach the next recordable area can be done more quickly.

FIGS. **17(b)** and **17(c)** illustrate how the close processing can be done in a situation where there are two bubble areas there. However, even if a recordable area falls between a single bubble area and a recorded area where data has already been written, similar processing can also be performed.

Suppose a situation shown in FIG. **17(d)**, for instance. FIG. **17(d)** is a schematic representation illustrating a user data area where a recorded area **d1** in which data has already been written, a recordable area **d2** in which no data has been written yet, and a bubble area **d3** are arranged sequentially. Such a user data area is in the open state and has been assigned as a sequential recording range SRR #N. However, this order is just an example. Alternatively, any other order may be adopted as long as a recordable area where no data has been written yet falls between a recorded area and a bubble area in three consecutive areas.

In this case, if the size of the recordable area **d2** is equal to or smaller than the predetermined reference value described above, then the areas **d1, d2** and **d3** are assigned as a single sequential recording range SRR #N, which is then closed. FIG. **17(e)** illustrates the sequential recording range SRR #N that has been closed.

On the other hand, if the size of the recordable area **d2** shown in FIG. **17(d)** is greater than the predetermined reference value described above, then the areas **d1** and **d2** are assigned as a single sequential recording range **SRR,** the area **d3** is also assigned as another sequential recording range **SRR,** and only the SRR corresponding to the area **d3** is closed.

As for the example illustrated in FIG. **17(e)**, the area that follows the bubble area **d3** is not mentioned. If there are a recordable area where no data has been written yet and another bubble area immediately after the bubble area **d3**, then the relation between the bubble area **d3** and the other bubble area may be the same as the one shown in FIG. **17(a)****.** That is why the recordable area where no data has been written yet may be either opened as shown in FIG. **17(b)** or closed as shown in FIG. **17(c)** according to its size. In the latter case, the sequential recording range SRR #N in the closed state shown in FIG. **17(e)** will be extended through the end of the other bubble area, and therefore, have a further increased length.

FIGS. **17(a)** through **17(e)** illustrate multiple tracks, which are arranged as a number of rings on the BD 1, as a single continuous line just for convenience sake. It should be noted, however, that not all of those tracks illustrated are covered with the bubble areas. Actually, some clusters of the tracks are just covered (or overlapped) with bubbles as indicated by the "defective clusters" in FIGS. **17(b)** and **17(c)**.

Even some of those tracks (or clusters) falling within the bubble areas illustrated may be accessible for reading or writing. That is why a defective area may be defined on a cluster-by-cluster basis. Furthermore, there are not always multiple non-accessible tracks. Even if there is only one non-accessible track, that track may also be regarded as a defective area.

Nevertheless, in a single track, some clusters may be recordable but others not, thus producing some instability. In that case, the processing should rather be performed on the supposition that there are a series of write errors. Then, the reliability would increase and the processing could get done more quickly. For that reason, there is no problem even if the entire track covered with a bubble is regarded as a bubble area.

In the preferred embodiment described above, the bubble area is regarded as a defective area. This is because currently bubbles are likely to produce a large-scale defective area more prominently than any other factor. If a defective area is produced due to not a bubble but any other factor, naturally the optical disc apparatus of the present invention can also perform the same operation as the one described above on an optical disc with such a defective area.

In the BD recorder **100** of the preferred embodiments described above, the optical disc is supposed to be a BD-R on which data can be written only once. However, this is just as example. Alternatively, the optical disc may also be a rewritable optical disc (i.e., a so-called "BD-RE").

Also, in the preferred embodiments described above, the optical disc apparatus is supposed to be a BD recorder. However, this is also only an example. Alternatively, the optical disc apparatus may also be a camcorder that can record a moving picture on an optical disc or a system comprised of a PC and a BD drive. In the latter case, the PC corresponds to the high-order controller and the BD drive corresponds to the optical disc drive in the preferred embodiments described above.

That is to say, as long as the optical disc apparatus includes the high-order controller and the optical disc drive, the apparatus may be either a system that is integrated together in a single housing or a system in which the high-order controller and the optical disc drive are arranged in two different housings. In any case, if the high-order controller and the optical disc drive perform the special processing and functions described above, that system will achieve the effect of the present invention overall. Therefore, each of the high-order controller and the optical disc drive can also be regarded as a device that performs novel processing.

### INDUSTRIAL APPLICABILITY

An optical disc apparatus according to the present invention searches for a defective area and determines its location and size before data starts to be written. That is why the data can be written with the defective area avoided, and therefore, the data writing operation can get done smoothly after that and the probability of write errors can be reduced significantly. This would contribute particularly greatly to improving the real-time recording performance of an optical disc apparatus that receives data and writes it sequentially. As a result, a highly reliable optical disc apparatus can be provided.

In addition, it is not until the size of the defective area is measured that the storage area is managed so that no data will be written on the defective area. That is why there is no need to waste otherwise recordable areas just to avoid the defective area. As a result, the storage area of the disc can be made full use of.

The present invention is implementable as not just an optical disc apparatus but also a camcorder that can record video on an optical disc, a recordable crime prevention camera system, or a system comprised of a PC and a BD drive.

## Claims

1. An optical disc apparatus comprising:
an optical pickup (610) configured to irradiate an optical disc (1) with a light beam and generate a light detection signal based on the light beam that has been reflected from the optical disc (1);
**characterized by**
a search section (151) configured to search, before data is written there, a storage area on the optical disc for any defective area by controlling the optical pickup to shift the beam spot of the irradiating light beam on the disc;
a defect decision section (152) configured to determine, if an error has been detected based on the light detection signal, a part of the storage area where the error has occurred to be a defective area;
a size measuring section (153) configured to measure the size of the defective area and generate a defect information list to locate the defective area; and
a recording range control section (140) configured to manage the storage area by reference to the defect information list such that no data is written on the defective area,
wherein the optical disc is a written only once Blu-ray Disc (BD-R) or a rewritable Blu-ray Disc (BD-RE), and
wherein the recording range control section (140) is configured to assign or reserve the defective area, which has been located by reference to the defect information list, as a sequential recording range (SRR), and close the assigned or reserved sequential recording range (SRR) such that no data is recordable in the assigned or reserved sequential recording range.

2. The optical disc apparatus of claim 1, wherein the storage area includes first, second and third areas that are continuous with each other, where one of the first and third areas is the defective area, the other area is either a recorded area where data has been written or another defective area, and the second area is an unrecorded area where no data has been written yet, and
wherein if the area size of the unrecorded area is equal to or smaller than a predetermined reference value, the recording range control section (140) is configured to assign or reserve not just the defective area but also the unrecorded area as the single sequential recording range (SRR), but if the area size of the unrecorded area is greater than the predetermined reference value, the recording range control section (140) is configured to assign or reserve only the defective area as the single sequential recording range (SRR).

3. The optical disc apparatus of claim 1, wherein the defect decision section (152) is configured to determine a part of the storage area, where a predicted type of error has occurred due to the presence of the defective area, as the defective area.

4. The optical disc apparatus of claim 3, wherein the defect decision section (152) is configured to detect a servo error by measuring how long the signal level of a servo signal, which has been generated based on the light detection signal, is greater than a predetermined threshold value and determines an area where the servo error has occurred to be the defective area.

5. The optical disc apparatus of claim 1, wherein a number of tracks are arranged on the optical disc, and
wherein after the error has been detected, the search section (151) is configured to instruct the optical pickup to access the tracks intermittently, thereby searching for the defective area.

6. The optical disc apparatus of claim 5, wherein until the error is detected, the search section (151) is configured to instruct the optical pickup to access the tracks at a first interval, but
after the error has been detected, the search section (151) is configured to instruct the optical pickup to access the tracks at a second interval, which is shorter than the first interval, thereby searching for the defective area.

7. The optical disc apparatus of claim 6, wherein after the error has been detected, the search section (151) is configured to instruct the optical pickup to shift the spot of the irradiating light beam back by at most the first interval, thereby searching for the defective area, while the size measuring section (153) measures the size of the defective area.

8. The optical disc apparatus of claim 1, further comprising a writing control section (120) configured to write management information about the data to be written on the optical disc,
wherein the optical disc has a management information area that stores management information to find a recordable area in which the data can be written, and
wherein the recording range control section (140) is configured to generate, by reference to the defect information list, management information that does not include a piece of information that designates the defective area as the recordable area and the writing control section (120) is configured to write the management information generated on the management information area of the optical disc.

9. The optical disc apparatus of claim 8, wherein the storage area includes the defective area and the recordable area, and
wherein the recording range control section (140) is configured to generate, as the management information, range information indicating the beginning of the recordable area and the end of the data stored and range defining information that defines the range information.

10. The optical disc apparatus of claim 8, wherein the storage area includes the defective area and the recordable area, and
wherein the recording range control section (140) is configured to generate range information, indicating the beginning and the end of the defective area, as the management information but does not generate any information that defines the range information of the defective area.

11. The optical disc apparatus of claim 1, wherein the defective area is an area with a bubble that was produced when the optical disc was made.

12. The optical disc apparatus of claim 11, wherein the defective area covers a number of tracks on the optical disc.

13. The optical disc apparatus of claim 1, wherein the apparatus includes a drive (102) and a high-order controller (104), which are connected together through an input/output bus, and
wherein the drive (102) includes the optical pickup, the search section (151), the defect decision section (152), and the recording range control section (140), and
wherein the high-order controller (104) includes an instruction issuing section (106) configured to issue instructions to the drive, and
wherein the instruction issuing section (106) is configured to output a check command that the defective area be searched for before the data is written on the storage area of the optical disc, a result report command that a result of the search be reported after the defective area has been searched for, and a close command that the defective area be closed such that no data is written on the defective area that has been located by the defect information list.

## Patentansprüche

1. Optische Datenträgervorrichtung, die umfasst:
einen optischen Abnehmer (610), der konfiguriert ist zum Strahlen eines Lichtstrahls auf einen optischen Datenträger (1) und zum Erzeugen eines Lichterfassungssignals basierend auf dem Lichtstrahl, der von dem optischen Datenträger (1) reflektiert wurde,
**gekennzeichnet durch**
einen Suchabschnitt (151), der konfiguriert ist zum Suchen, bevor dort Daten geschrieben werden, in einem Speicherbereich auf dem optischen Datenträger nach einem fehlerhaften Bereich **durch** das Steuern des optischen Abnehmers für ein Verschieben des Strahlpunkts des auf den Datenträger gestrahlten Lichtstrahls,
einen Defektbestimmungsabschnitt (152), der konfiguriert ist zum Bestimmen, wenn ein Fehler basierend auf dem Lichterfassungssignal erfasst wurde, eines Teils des Speicherbereichs, in dem der Fehler aufgetreten ist, als eines fehlerhaften Bereichs,
einen Größenmessabschnitt (153), der konfiguriert ist zum Messen der Größe des fehlerhaften Bereichs und zum Erzeugen einer Defektinformationenliste für eine Lokalisierung des fehlerhaften Bereichs, und
einen Aufzeichnungsbereich-Steuerabschnitt (140), der konfiguriert ist zum Verwalten des Speicherbereichs mit Bezug auf die Defektinformationenliste derart, dass keine Daten in den fehlerhaften Bereich geschrieben werden,
wobei der optische Datenträger eine nur einmal beschreibbare Blue-ray Disc (BD-R) oder eine wiederbeschreibbare Blu-ray Disc (BD-RE) ist, und
wobei der Aufzeichnungsbereich-Steuerabschnitt (140) konfiguriert ist zum Zuweisen oder Reservieren des fehlerhaften Bereichs, der mit Bezug auf die Defektinformationenliste lokalisiert wurde, als eines sequentiellen Aufzeichnungsbereichs (SRR) und zum Schließen des zugewiesenen oder reservierten sequentiellen Aufzeichnungsbereichs (SRR) derart, dass keine Daten in dem zugewiesenen oder reservierten sequentiellen Aufzeichnungsbereich aufgezeichnet werden können.

2. Optische Datenträgervorrichtung nach Anspruch 1, wobei der Speicherbereich erste, zweite und dritte Bereiche umfasst, die aufeinander folgen, wobei einer der ersten und dritten Bereiche der fehlerhafte Bereich ist, der jeweils andere Bereich entweder ein beschriebener Bereich, in den Daten geschrieben wurden, oder ein weiterer fehlerhafter Bereich ist und der zweite Bereich ein nicht-beschriebener Bereich, in den noch keine Daten geschrieben wurden, ist, und
wobei, wenn die Bereichsgröße des nicht-beschriebenen Bereichs gleich oder kleiner als ein vorbestimmter Bezugswert ist, der Aufzeichnungsbereich-Steuerabschnitt (140) konfiguriert ist zum Zuweisen oder Reservieren nicht nur des fehlerhaften Bereichs, sondern auch des nicht-beschriebenen Bereichs als des einzelnen sequentiellen Aufzeichnungsbereichs (SRR), und wenn die Bereichsgröße des nicht-beschriebenen Bereichs größer als der vorbestimmte Bezugswert ist, der Aufzeichnungsbereich-Steuerabschnitt (140) konfiguriert ist zum Zuweisen oder Reservieren nur des fehlerhaften Bereichs als des einzelnen sequentiellen Aufzeichnungsbereichs (SRR).

3. Optische Datenträgervorrichtung nach Anspruch 1, wobei der Defektbestimmungsabschnitt (152) konfiguriert ist zum Bestimmen eines Teils des Speicherbereichs, in dem ein vorausgesagter Typ von Fehler aufgrund des Vorhandenseins des fehlerhaften Bereichs aufgetreten ist, als des fehlerhaften Bereichs.

4. Optische Datenträgervorrichtung nach Anspruch 3, wobei der Defektbestimmungsabschnitt (152) konfiguriert ist zum Erfassen eines Servofehlers durch das Messen, wie lange der Signalpegel eines Servosignals, das basierend auf dem Lichterfassungssignal erzeugt wurde, größer als ein vorbestimmter Schwellwert ist, und zum Bestimmen eines Bereichs, in dem der Servofehler aufgetreten ist, als des fehlerhaften Bereichs.

5. Optische Datenträgervorrichtung nach Anspruch 1, wobei eine Anzahl von Spuren auf dem optischen Datenträger angeordnet sind, und
wobei, nachdem der Fehler erfasst wurde, der Suchabschnitt (151) konfiguriert ist zum Anweisen des optischen Abnehmers, intermittierend auf die Spuren zuzugreifen, um nach dem fehlerhaften Bereich zu suchen.

6. Optische Datenträgervorrichtung nach Anspruch 5, wobei:
bis der Fehler erfasst wird, der Suchabschnitt (151) konfiguriert ist zum Anweisen des optischen Abnehmers, mit einem ersten Intervall auf die Spuren zuzugreifen, und
nachdem der Fehler erfasst wurde, der Suchabschnitt (151) konfiguriert ist zum Anweisen des optischen Abnehmers, mit einem zweiten Intervall, das kürzer als das erste Intervall ist, auf die Spuren zuzugreifen, um nach dem fehlerhaften Bereich zu suchen.

7. Optische Datenträgervorrichtung nach Anspruch 6, wobei, nachdem der Fehler erfasst wurde, der Suchabschnitt (151) konfiguriert ist zum Anweisen des optischen Abnehmers, den Punkt des gestrahlten Lichtstrahls mit höchstens dem ersten Intervall zurück zu verschieben, um nach dem fehlerhaften Bereich zu suchen, während der Größenmessabschnitt (153) die Größe des fehlerhaften Bereichs misst.

8. Optische Datenträgervorrichtung nach Anspruch 1, die weiterhin einen Schreibsteuerabschnitt (120) umfasst, der konfiguriert ist zum Schreiben von Verwaltungsinformationen zu den auf den optischen Datenträger zu schreibenden Daten,
wobei der optische Datenträger einen Verwaltungsinformationenbereich aufweist, der Verwaltungsinformationen speichert, um einen beschreibbaren Bereich, in den Daten geschrieben werden können, zu finden, und
wobei der Aufzeichnungsbereich-Steuerabschnitt (140) konfiguriert ist zum Erzeugen, mit Bezug auf die Defektinformationenliste, von Verwaltungsinformationen, die keine Informationen enthalten, die den fehlerhaften Bereich als den beschreibbaren Bereich designieren, und wobei der Schreibsteuerabschnitt (120) konfiguriert ist zum Schreiben der erzeugten Verwaltungsinformationen in den Verwaltungsinformationenbereich des optischen Datenträgers.

9. Optische Datenträgervorrichtung nach Anspruch 8, wobei der Speicherbereich den fehlerhaften Bereich und den beschreibbaren Bereich enthält, und
wobei der Aufzeichnungsbereich-Steuerabschnitt (140) konfiguriert ist zum Erzeugen, als der Verwaltungsinformationen, von Bereichsinformationen, die den Anfang des beschreibbaren Bereichs und das Ende der gespeicherten Daten angeben, und von Bereichsdefinitionsinformationen, die die Bereichsinformationen definieren.

10. Optische Datenträgervorrichtung nach Anspruch 8, wobei der Speicherbereich den fehlerhaften Bereich und den beschreibbaren Bereich enthält, und
wobei der Aufzeichnungsbereich-Steuerabschnitt (140) konfiguriert ist zum Erzeugen von Bereichsinformationen, die den Anfang und das Ende des fehlerhaften Bereichs angeben, als der Verwaltungsinformationen, wobei er jedoch keine Informationen erzeugt, die die Bereichsinformationen des fehlerhaften Bereichs definieren.

11. Optische Datenträgervorrichtung nach Anspruch 1, wobei der fehlerhafte Bereich ein Bereich mit einer Blase ist, die während der Herstellung des optischen Datenträgers erzeugt wurde.

12. Optische Datenträgervorrichtung nach Anspruch 11, wobei sich der fehlerhafte Bereich über eine Anzahl von Spuren auf dem optischen Datenträger erstreckt.

13. Optische Datenträgervorrichtung nach Anspruch 1, wobei die Vorrichtung ein Laufwerk (102) und einen übergeordneten Controller (104) enthält, die über einen Ein-/Ausgabebus miteinander verbunden sind, und
wobei das Laufwerk (102) den optischen Abnehmer, den Suchabschnitt (151), den Defektbestimmungsabschnitt (152) und den Aufzeichnungsbereich-Steuerabschnitt (140) enthält, und
wobei der übergeordnete Controller (104) einen Befehlsausgabeabschnitt (106) enthält, der konfiguriert ist zum Ausgeben von Befehlen an das Laufwerk, und
wobei der Befehlsausgabeabschnitt (106) konfiguriert ist zum Ausgeben eines Prüfbefehls für ein Suchen nach dem fehlerhaften Bereich, bevor die Daten in den Speicherbereich des optischen Datenträgers geschrieben werden, eines Ergebnisberichtbefehls für ein Berichten des Ergebnisses der Suche, nachdem nach dem fehlerhaften Bereich gesucht wurde, und einen Schließbefehl für ein Schließen des fehlerhaften Bereichs, damit keine Daten in den fehlerhaften Bereich, der durch die Defektinformationenliste lokalisiert wurde, geschrieben werden.

## Revendications

1. Appareil à disque optique comprenant :
un dispositif de capture optique (610) configuré pour irradier un disque optique (1) avec un faisceau lumineux et pour générer un signal de détection de lumière sur base du faisceau lumineux qui a été réfléchi par le disque optique (1) ;
**caractérisé par**
une section de recherche (151) configurée pour chercher d'éventuelles plages défectueuses d'une plage de stockage sur le disque optique, avant que des données n'y soient écrites, en commandant le dispositif de capture optique de manière à déplacer sur le disque le point de faisceau du faisceau lumineux d'irradiation ;
une section de décision de défaut (152) configurée pour désigner, si une erreur a été détectée sur base du signal de détection de lumière, une partie de la plage de stockage où l'erreur s'est produite comme étant une plage défectueuse ;
une section de mesure de taille (153) configurée pour mesurer la taille de la plage défectueuse et pour générer une liste d'information de défaut afin de localiser la plage défectueuse ; et
une section de contrôle de plage d'enregistrement (140) configurée pour gérer la plage de stockage par référence à la liste d'information de défaut de telle sorte qu'aucune donnée ne soit écrite dans la plage défectueuse,
dans lequel le disque optique est un disque Blu-ray inscriptible une seule fois (BD-R) ou un disque Blu-ray réinscriptible (BD-RE), et
dans lequel la section de contrôle de plage d'enregistrement (140) est configurée pour attribuer ou réserver la plage défectueuse, qui a été localisée par référence à la liste d'information de défaut, comme une plage d'enregistrement séquentiel (SRR), et pour finaliser la plage d'enregistrement séquentiel (SRR) attribuée ou réservée de telle sorte qu'aucune donnée ne puisse être enregistrée dans la plage d'enregistrement séquentiel attribuée ou réservée.

2. Appareil à disque optique selon la revendication 1,
dans lequel la plage de stockage comprend des première, deuxième et troisième plages qui sont contiguës entre elles, où l'une des première et troisième plages est la plage défectueuse, l'autre plage est soit une plage enregistrée où des données ont été écrites, soit une autre plage défectueuse, et la deuxième plage est une plage non enregistrée où aucune donnée n'a encore été écrite, et
dans lequel, si la taille de plage de la plage non enregistrée est inférieure ou égale à une valeur de référence prédéterminée, la section de contrôle de plage d'enregistrement (140) est configurée pour attribuer ou réserver non seulement la plage défectueuse mais aussi la plage non enregistrée comme étant la plage unique d'enregistrement séquentiel (SRR), mais si la taille de plage de la plage non enregistrée est supérieure à la valeur de référence prédéterminée, la section de contrôle de plage d'enregistrement (140) est configurée pour attribuer ou réserver uniquement la plage défectueuse comme étant la plage unique d'enregistrement séquentiel (SRR).

3. Appareil à disque optique selon la revendication 1, dans lequel la section de décision de défaut (152) est configurée pour désigner une partie de la plage de stockage où un type d'erreur prédit s'est produit du fait de la présence de la plage défectueuse comme étant la plage défectueuse.

4. Appareil à disque optique selon la revendication 3, dans lequel la section de décision de défaut (152) est configurée pour détecter une erreur de servocommande en mesurant pendant combien de temps le niveau de signal d'un signal de servocommande, qui a été généré sur base du signal de détection de lumière, est supérieur à une valeur seuil prédéterminée, et désigne une plage où l'erreur de servocommande s'est produite comme étant la plage défectueuse.

5. Appareil à disque optique selon la revendication 1,
dans lequel plusieurs pistes sont agencées sur le disque optique, et
dans lequel, après que l'erreur a été détectée, la section de recherche (151) est configurée pour commander au dispositif de capture optique d'accéder aux pistes de façon intermittente, cherchant ainsi la plage défectueuse.

6. Appareil à disque optique selon la revendication 5, dans lequel
jusqu'à ce que l'erreur soit détectée, la section de recherche (151) est configurée pour commander au dispositif de capture optique d'accéder aux pistes selon un premier intervalle, mais
après que l'erreur a été détectée, la section de recherche (151) est configurée pour commander au dispositif de capture optique d'accéder aux pistes selon un deuxième intervalle, qui est inférieur au premier intervalle, cherchant ainsi la plage défectueuse.

7. Appareil à disque optique selon la revendication 6 dans lequel, après que l'erreur a été détectée, la section de recherche (151) est configurée pour commander au dispositif de capture optique de ramener le point du faisceau lumineux d'irradiation d'au plus le premier intervalle, cherchant ainsi la plage défectueuse, alors que la section de mesure de taille (153) mesure la taille de la plage défectueuse.

8. Appareil à disque optique selon la revendication 1, comprenant en outre une section de contrôle d'écriture (120) configurée pour écrire de l'information de gestion concernant les données à écrire sur le disque optique,
dans lequel le disque optique comporte une plage d'information de gestion qui stocke de l'information de gestion pour trouver une plage enregistrable dans laquelle les données peuvent être écrites, et
dans lequel la section de contrôle de plage d'enregistrement (140) est configurée pour générer, par référence à la liste d'information de défaut, de l'information de gestion qui n'inclut pas un élément d'information désignant la plage défectueuse comme étant la plage enregistrable, et la section de contrôle d'écriture (120) est configurée pour écrire l'information de gestion générée sur la plage d'information de gestion du disque optique.

9. Appareil à disque optique selon la revendication 8,
dans lequel la plage de stockage inclut la plage défectueuse et la plage enregistrable, et
dans lequel la section de contrôle de plage d'enregistrement (140) est configurée pour générer, comme information de gestion, de l'information de plage indiquant le début de la plage enregistrable et la fin des données stockées, et de l'information de définition de plage qui définit l'information de plage.

10. Appareil à disque optique selon la revendication 8,
dans lequel la plage de stockage inclut la plage défectueuse et la plage enregistrable, et
dans lequel la section de contrôle de plage d'enregistrement (140) est configurée pour générer de l'information de plage indiquant le début et la fin de la plage défectueuse, comme information de gestion, mais ne génère aucune information définissant l'information de plage de la plage défectueuse.

11. Appareil à disque optique selon la revendication 1, dans lequel la plage défectueuse est une plage avec une bulle produite lors de la fabrication du disque optique.

12. Appareil à disque optique selon la revendication 11, dans lequel la plage défectueuse recouvre plusieurs pistes sur le disque optique.

13. Appareil à disque optique selon la revendication 1,
dans lequel l'appareil comprend un lecteur (102) et un contrôleur d'ordre supérieur (104), qui sont connectés entre eux via un bus d'entrée/sortie, et
dans lequel le lecteur (102) comprend le dispositif de capture optique, la section de recherche (151), la section de décision de défaut (152) et la section de contrôle de plage d'enregistrement (140), et
dans lequel le contrôleur d'ordre supérieur (104) comprend une section d'émission d'instructions (106) configurée pour envoyer des instructions au lecteur, et
dans lequel la section d'émission d'instructions (106) est configurée pour sortir une commande de vérification qui commande la recherche de la plage défectueuse avant que les données ne soient écrites sur la plage de stockage du disque optique, une commande de rapport de résultat qui commande qu'un résultat de la recherche soit rapporté après que la plage défectueuse a été recherchée, et une commande de finalisation qui commande que la plage défectueuse soit finalisée de telle sorte qu'aucune donnée ne soit écrite sur la plage défectueuse qui a été localisée par la liste d'information de défaut.
